# EUROPEAN PATENT SPECIFICATION

(11) **EP 3 051 429 B1**
(45) Date of publication and mention of the grant of the patent: **25.03.2020**
(21) Application number: 16152927.6
(22) Date of filing: 27.01.2016
(51) Int. Cl.: G06F 17/22

(54) **ENCODING DEVICE AND ENCODING METHOD**
CODIERUNGSVORRICHTUNG UND CODIERUNGSVERFAHREN
DISPOSITIF DE CODAGE ET PROCÉDÉ DE CODAGE

(30) Priority: 28.01.2015 JP 2015014399
(43) Date of publication of application: 03.08.2016
(73) Proprietor: FUJITSU LIMITED, Kawasaki-shi Kanagawa 211-8588 (JP)
(72) Inventor: Kataoka, Masahiro, Kanagawa, 211-8588 (JP); Tao, Kosuke, Kanagawa, 211-8588 (JP); Ideuchi, Masao, Kanagawa, 211-8588 (JP)
(74) Representative: Hoffmann Eitle

(56) References cited:
- US-A1- 2003 023 628
- US-A1- 2006 085 737
- US-A1- 2008 077 606
- US-B1- 6 635 088

## Description

### FIELD

The embodiments discussed herein are related to a character-data conversion program, or the like.

### BACKGROUND

Structured documents, such as HTML or XML, include tags and document contents (original texts) in a mixed manner, and they are represented by using a text format. As for tags that are used in structured documents, some of the tags include a variable section, such as a reference source, and the others do not include any variable sections. Here, with regard to the tags that have a variable section, there are few tags that are the same in its entirety, and there are limited types of tags that do not have any variable sections. Examples of the tags that do not include any variable sections are <title></title> or <body></body>.

For compression on the above-described documents that include tags and original texts in a mixed manner, the LZ77-based compression of ZIP, or the like, is known for assigning codes by using longest-match string searching.

Furthermore, as another example, there is a known technology for compressing documents that include a tag that does not have any variable sections (for example, see Japanese Laid-open Patent Publication No. 2000-101442). According to the technology, for example, a data compression device identifies a tag in a character string stream, removes it, and outputs it as tag information. Then, the data compression device allocates a tag code in the position of the character string stream, from which the tag is removed, so as to identify it, encodes the character string stream that includes the allocated tag code, and outputs the code stream. Furthermore, the information on the removed tag is used to search the position of the corresponding tag code in the character string stream.

However, conventional technologies have a first problem in that, when compression is conducted on a document that includes a tag and an original text in a mixed manner, the compression rate of the original text is degraded. Furthermore, in a different perspective, there is a second problem in that, when compression is conducted on a document that includes a tag and an original text in a mixed manner, the positional relationship of the tag and the character string is not maintained.

The first problem is explained. For example, in the case of ZIP, the document compression device allocates an original text and a tag in a slide window and then conducts longest-match string searching; therefore, the optimum character string is dropped out of the slide window. Specifically, the size of the slide window is previously set and, if the data to be stored within the slide window exceeds the size of the slide window, the previously stored data in the slide window is dropped out. Therefore, during the LZ77-based compression on documents that include tags and original texts in a mixed manner, the area of the original text for which longest match is made is small. That is, the LZ77-based compression on documents that include tags and original texts in a mixed manner has a program in that the compression rate of original texts is degraded.

Furthermore, the second problem is explained. Conventional data compression devices allocate a tag code, which is obtained by encoding a tag, in the position of a character string stream and then compresses the character string stream that includes the tag code and the original text; therefore, the positional relationship of the tag and the character string is not maintained. US6635088 B1 discloses a method, system, and computer-readable code for reducing Extensible Markup Language (XML) and Document Type Definition (DTD) document file size through one or more compression techniques. In one aspect, a compression technique for tags is defined that reduces the size of tags within either or both of XML and DTD files. In another aspect, a compression technique for attributes within tags may be used to further reduce file size (again, in either XML or DTD files). In a further aspect, a compression technique for strings within an XML file is defined, whereby the decompression will be performed automatically by an XML parser. US2003023628 A1 and US2008077606 A1 disclose similar methods, systems, and computer-readable codes.

Accordingly, it is an object in one aspect of an embodiment of the invention to improve the compression rate of an original text even if compression is conducted on a document that includes a tag and an original text in a mixed manner. According to an aspect, the object is to improve the function to search a character string in consideration of the tagging state with regard to an original text while compression is conducted on a document that includes a tag and an original text in a mixed manner.

### SUMMARY

The invention is defined by the appended independent claims. Further embοdiments are defined in the dependent claims.

### BRIEF DESCRIPTION OF DRAWINGS

FIG. 1 is a diagram that illustrates an example of the flow of a compression operation of an information processing apparatus according to an example useful for understanding the present invention;
FIG. 2 is a diagram that illustrates an example of the dynamic tag dictionary according to the example useful for understanding the present invention;
FIG. 3 is a diagram that illustrates an example of a bit filter;
FIG. 4 is a diagram that illustrates an example of the block configuration of a compression file;
FIG. 5 is a diagram that illustrates an example of the flow of a decompression operation of the information processing apparatus according to the example useful for understanding the present invention;
FIG. 6 is a functional block diagram that illustrates a configuration of the information processing apparatus according to the example useful for understanding the present invention;
FIG. 7 is a diagram that illustrates an example of the data structure of a decompression nodeless tree;
FIG. 8 is a functional block diagram that illustrates an example of the configuration of a compression unit according to the example useful for understanding the present invention;
FIG. 9 is a functional block diagram that illustrates an example of the configuration of a decompression unit according to the example useful for understanding the present invention;
FIG. 10 is a flowchart that illustrates the steps of the operation of the compression unit according to the example useful for understanding the present invention;
FIG. 11 is a flowchart that illustrates the steps of the operation of the decompression unit according to the example useful for understanding the present invention;
FIG. 12 is a diagram that illustrates an example of the flow of the compression operation of the information processing apparatus according to a first embodiment;
FIG. 13 is a diagram that illustrates an example of the dynamic tag dictionary according to the first embodiment;
FIG. 14 is a diagram that illustrates an example of the flow of a search operation of the information processing apparatus according to the first embodiment;
FIG. 15 is a functional block diagram that illustrates a configuration of the information processing apparatus according to the first embodiment;
FIG. 16 is a functional block diagram that illustrates an example of the configuration of a search unit according to the first embodiment;
FIG. 17 is a flowchart that illustrates the steps of the operation of the search unit according to the first embodiment;
FIG. 18A is a diagram (1) that illustrates an example of the flow of the compression operation of the information processing apparatus according to a second embodiment;
FIG. 18B is a diagram (2) that illustrates an example of the flow of the compression operation of the information processing apparatus according to the second embodiment;
FIG. 19 is a diagram that illustrates an example of the flow of the search operation of the information processing apparatus according to the second embodiment;
FIG. 20 is a diagram that illustrates a hardware configuration of the information processing apparatus according to the example useful for understanding the present invention to the second embodiment; and
FIG. 21 is a diagram that illustrates an example of the configuration of a program that is executed by a computer.

### DESCRIPTION OF EMBODIMENTS

Preferred embodiments of the present invention will be explained with reference to accompanying drawings. Here, the present invention is not limited to the embodiment.

### [a] Example useful for understanding the present invention

### Flow of a compression operation

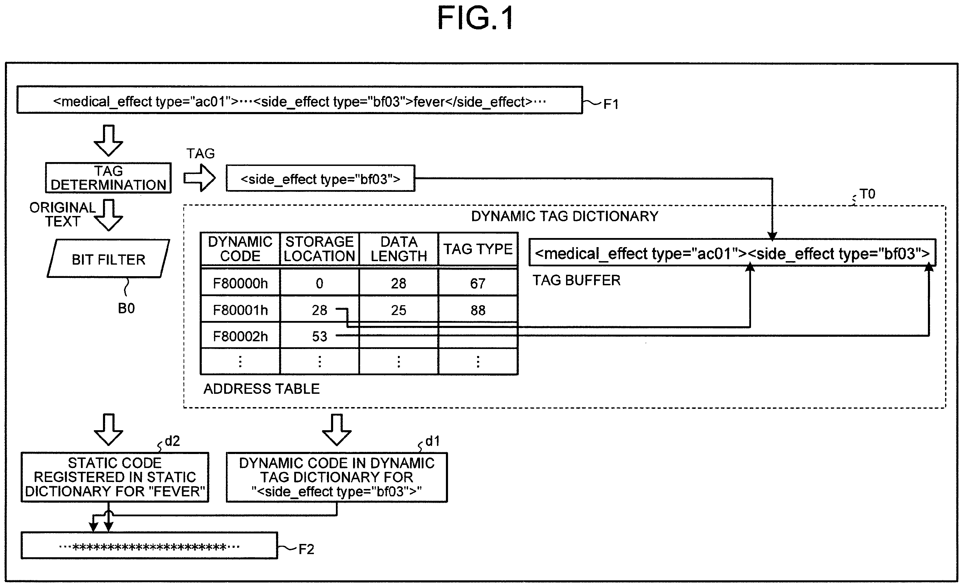

First, with reference to FIG. 1, an explanation is given of a compression operation of an information processing apparatus according to an example useful for understanding the present invention. FIG. 1 is a diagram that illustrates an example of the flow of the compression operation of the information processing apparatus according to the example useful for understanding the present invention. As illustrated in FIG. 1, a file F1 is a target file to be compressed, and it is a document that includes the character strings of tags and original texts other than the tags in a mixed manner.

Here, tags refer to character strings that start with a start symbol '<' and that end with an end symbol '>', and they include tags that do not include any variable sections and tags that include a variable section. Examples of the tag that does not include any variable sections include <title></title> and <body></body>. Examples of the tag including a variable section include the ones in a case where an anchor name is different or if the designating order of attributes is different. For example, the file F1 contains the data "<medical effect type="ac01">...<side_effect type="bf03">fever</side_effect>...". In this data, <medical_effect type="ac01"> and <side_effect type="bf03"> are the tags that include a variable section. In this data, "fever" corresponds to the character string of the original text other than the tag.

The information processing apparatus loads, into a memory area, the character data that is stored in the compression target file F1. The information processing apparatus extracts a character string from the beginning of the memory area and determines whether the extracted character string is a tag. For example, the information processing apparatus determines whether the starting character of the character string is the start symbol '<' of the tag.

If the character string is a tag, the information processing apparatus collectively registers the entire tag in a dynamic tag dictionary T0 and, based on the dynamic tag dictionary T0, compresses it into the compressed code that corresponds to the registered tag. The compressed code, for example, corresponds to the first-type code.

Here, the dynamic tag dictionary T0 is a dictionary that relates a tag to a dynamic code that is dynamically assigned. Specifically, the information processing apparatus registers the character string of the entire tag and assigns, as a compressed code, a dynamic code that is dynamically assigned in the order it is registered. Furthermore, an example of the data structure of the dynamic tag dictionary T0 is described later.

If the character string is not a tag, the information processing apparatus outputs the character string as the original text to a bit filter B0. The information processing apparatus compares the bit filter B0 with the output character string and determines whether the output character string hits the bit filter B0. If the character string hits the bit filter B0, the information processing apparatus converts it into the compressed code that corresponds to the character string of the word based on a static dictionary. The compressed code, for example, corresponds to the second-type code. Furthermore, according to the example useful for understanding the present invention, the character string hits the bit filter B0.

Here, the bit filter B0 is a filter that identifies the character string of the word to be compressed by using the static dictionary. The static dictionary refers to a dictionary that relates a word to a compressed code in accordance with the frequency of the word on a document-to-document basis. Examples of the document include the compression target file. The static dictionary has previously registered therein the static code that is the compressed code that corresponds to each word. Furthermore, an example of the data structure of the bit filter B0 is described later.

The information processing apparatus outputs, to a compression file F2, each compressed code based on the dynamic tag dictionary T0 and each compressed code based on the bit filter B0 in a state such that the pre-conversion positional relationship of a tag or an original text in the input character data with regard to each compressed code is maintained.

An explanation is given of an operation in a case where compression is conducted on the character string "<side_effect type="bf03">..." in the file F1 that is the target to be compressed by the information processing apparatus.

First, the information processing apparatus determines whether the starting character of the character string is the start symbol '<' of the tag. In the example of FIG. 1, it is determined that the starting character of the character string is the start symbol '<' of the tag. Therefore, in the order the character string of the tag appears, the information processing apparatus relates the character string of the tag to a new dynamic code d1 and registers it in the dynamic tag dictionary T0. Specifically, the information processing apparatus collectively relates the character string "<side effect type="bf03">" of the tag to the new dynamic code d1 and registers it in the dynamic tag dictionary T0.

Furthermore, the information processing apparatus assigns, as a compressed code, the dynamic code d1 that is in the dynamic tag dictionary T0 and that is related to the character string of the tag. Here, "F80001h" is assigned as a compressed code of the character string "<side_effect type="bf03">" of the tag. Then, the information processing apparatus outputs the compressed code to the compression file F2 in a state such that the pre-conversion positional relationship of the tag in the input character data with regard to the compressed code is maintained.

Next, an explanation is given of an operation in a case where the information processing apparatus compresses the character string "fever" in the compression target file F1.

First, the information processing apparatus determines whether the starting character "f" of the character string is the start symbol '<' of the tag. In the example of FIG. 1, it is determined that the starting character of the character string is not the start symbol '<' of the tag. Therefore, the information processing apparatus outputs the character string "fever" as the original text to the bit filter B0. The information processing apparatus compares the bit filter B0 with the output character string "fever" and determines whether the output character string "fever" hits the bit filter B0. As the character string hits the bit filter B0, the information processing apparatus identifies, as a compressed code, a static code d2 that corresponds to the character string "fever" based on the static dictionary. Then, the information processing apparatus outputs it to the compression file F2 in a state such that the pre-conversion positional relationship of the original text based on the bit filter B0 with regard to the compressed code is maintained.

### Example of the dynamic tag dictionary

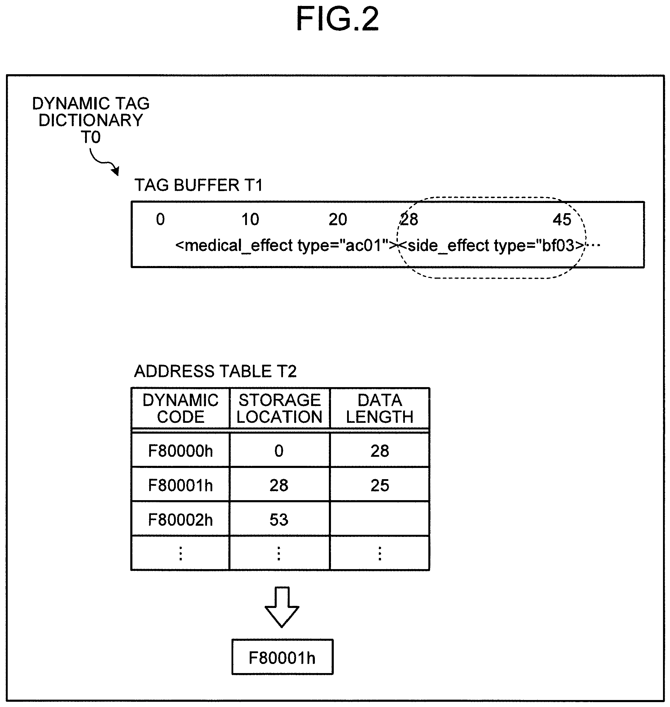

FIG. 2 is a diagram that illustrates an example of the dynamic tag dictionary according to the example useful for understanding the present invention. The dynamic tag dictionary T0 illustrated in FIG. 2 includes a tag buffer T1 and an address table T2. The tag buffer T1 stores the character string of a tag. The address table T2 stores a dynamic code, a storage location, and a data length in a related manner. The dynamic code is a predetermined fixed-length compressed code, and it is a code that is assigned in the order the character string of a tag is registered. Here, the dynamic code is a fixed-length 3-byte code that starts with the hex number "F". The storage location represents the location of the character string of a tag that is stored in the tag buffer T1. The data length represents the length (byte length) of the character string of a tag that is stored in the tag buffer T1.

An explanation is given of, for example, a case where a compressed code is assigned to the character string "<side_effect type="bf03">" of the tag.

The information processing apparatus collectively stores the character string "<side_effect type="bf03">" of the tag in the tag buffer T1. The information processing apparatus registers, in the address table T2, the storage location in which the character string of the tag is stored and the length of the stored data. Here, the information processing apparatus registers "28" as the storage location and "25" as the data length in the address table T2.

The information processing apparatus assigns, as a compressed code, the dynamic code that is in the address table T2 and that is related to the character string of the tag. Here, the information processing apparatus assigns, as a compressed code, the dynamic code "F80001h" that is related to the character string "<side_effect type="bf03">" of the tag.

### Example of the bit filter

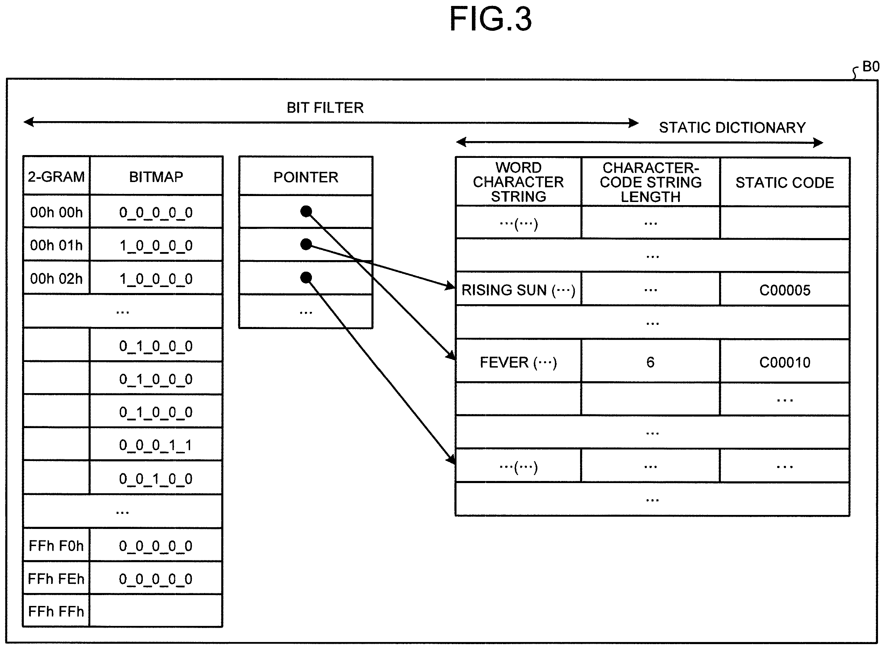

FIG. 3 is a diagram that illustrates an example of the bit filter. The bit filter B0 illustrated in FIG. 3 is a bit filter of Japanese common words for a predetermined document. As illustrated in FIG. 3, the bit filter B0 includes 2-gram, a bitmap, a pointer, a word character string, a character-code string length, and a static code in a related manner.

The 2-gram is the information that indicates the character code string of 2 characters. The bitmap indicates the bitmap that corresponds to the character code string of the 2-gram. For example, the bitmap that corresponds to "00h00h" is "0_0_0_0_0". The pointer is a pointer that indicates the location of the word character string that corresponds to a bitmap.

The word character string is a Japanese word that is registered in the static dictionary, and it is represented by using a character code string. Here, a character code string is noted in parentheses. The character-code string length is the length of the character code string that corresponds to a word character string. The static code is a compressed code that is assigned to a word character string.

An explanation is given of, for example, a case where a compressed code is assigned to the word character string "fever". The information processing apparatus compares the bit filter B0 with the word character string "fever", the word character string "fever" hits the bit filter B0, and identifies, as a compressed code, the static code "C00010" that is registered in the static dictionary.

### Example of the configuration of the compression file

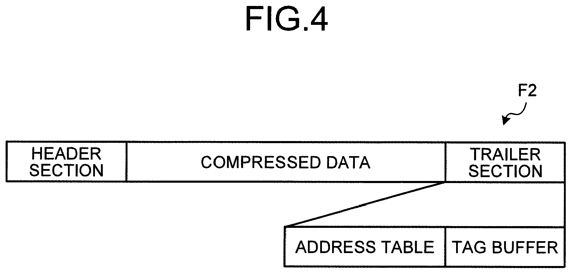

FIG. 4 is a diagram that illustrates an example of the block configuration of the compression file. As illustrated in FIG. 4, the compression file F2 includes a header section, compressed data, and a trailer section. The trailer section stores the information of the dynamic tag dictionary T0. Specifically, the trailer section stores the information of the tag buffer T1 and the address table T2 after a compression operation is completed. The information of the dynamic tag dictionary T0 corresponds to the information of the dynamic tag dictionary that is illustrated in FIG. 2. The header section stores the pointer to the information of the dynamic tag dictionary T0 that is stored in the trailer section. During the decompression operation that is described later, the information processing apparatus uses the pointer to the dynamic tag dictionary T0 in the header section to refer to the dynamic tag dictionary T0.

### Flow of a decompression operation

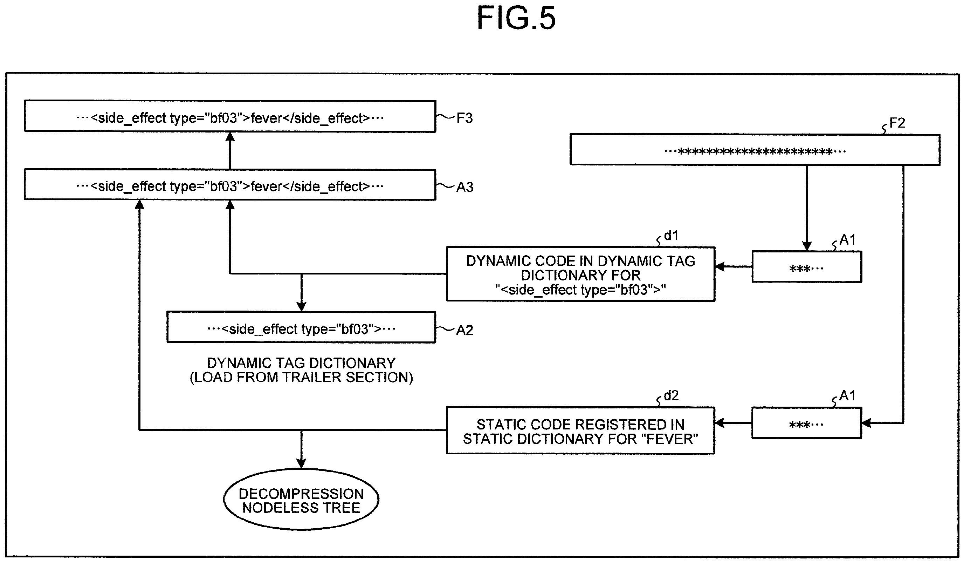

FIG. 5 is a diagram that illustrates an example of the flow of a decompression operation of the information processing apparatus according to the example useful for understanding the present invention. In FIG. 5, a memory area A1, a memory area A2, and a memory area A3 are provided in the memory as work areas for the decompression operation. The information processing apparatus loads, into the memory area A2, the information of the dynamic tag dictionary T0 that is stored in the trailer section of FIG. 4. Furthermore, the information processing apparatus loads the compression file F2 into the memory area A1 and sequentially reads compressed data. The information processing apparatus performs a decompression operation in accordance with the read compressed data. The information processing apparatus stores the decompressed data in the memory area A3 and generates a decompression file F3 based on the decompressed data that is stored in the memory area A3.

FIG. 5 illustrates a decompression operation on compressed data d1 and d2 that are illustrated in FIG. 1.

The information processing apparatus reads the compressed data and determines whether the compressed data is a dynamic code. In the example of FIG. 5, it is determined that the compressed data d1 is a dynamic code. Therefore, the information processing apparatus decompresses the compressed data d1 by using the dynamic tag dictionary T0. For example, the information processing apparatus identifies the dynamic code that matches the compressed data d1 in the address table T2 of the dynamic tag dictionary T0 and acquires the storage location and the data length that correspond to the identified dynamic code. Then, the information processing apparatus identifies, in the tag buffer T1, the decompressed data with the storage location and the data length that are acquired. Here, "<side_effect type="bf03">" is identified as the decompressed data.

Furthermore, the information processing apparatus reads the compressed data and determines whether the compressed data is a dynamic code. In the example of FIG. 5, it is determined that the compressed data d2 is not a dynamic code. Specifically, it is determined that the compressed data d2 is encoded by using the static dictionary. Therefore, the information processing apparatus decompresses the compressed data d2 by using a decompression nodeless tree. For example, the information processing apparatus compares the compressed data d2 with the decompression nodeless tree and identifies the pointer to the decompressed data, indicated by the decompression nodeless tree. Then, the information processing apparatus identifies the decompressed data on the basis of the identified pointer to the decompressed data. Here, "fever" is identified as the decompressed data.

Furthermore, the information processing apparatus writes the identified decompressed data in the memory area A3. Furthermore, after the entire compressed data in the compression file F2 is decompressed, the information processing apparatus writes the decompressed data, which has been written in the memory area A3, into the decompression file F3.

### Configuration of the information processing apparatus

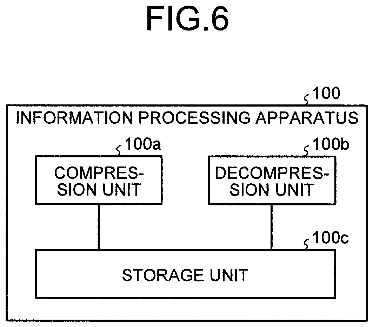

FIG. 6 is a functional block diagram that illustrates a configuration of the information processing apparatus according to the example useful for understanding the present invention. As illustrated in FIG. 6, an information processing apparatus 100 includes a compression unit 100a, a decompression unit 100b, and a storage unit 100c.

The compression unit 100a is a processing unit that performs the compression operation that is illustrated in FIG. 1. The decompression unit 100b is a processing unit that performs the decompression operation that is illustrated in FIG. 5. The storage unit 100c stores the compression target file F1, the compression file F2, and the decompression file F3. The compression file F2 includes the dynamic tag dictionary T0. Furthermore, the storage unit 100c stores the bit filter B0 as a compression nodeless tree and the decompression nodeless tree.

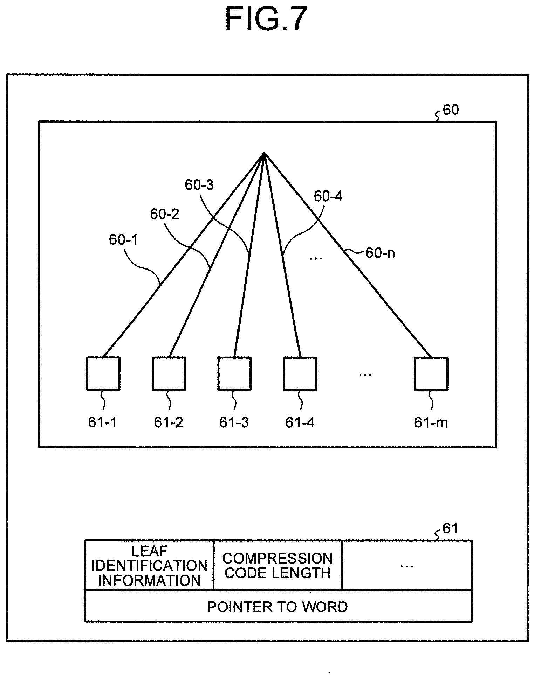

FIG. 7 is a diagram that illustrates an example of the data structure of the decompression nodeless tree. As illustrated in FIG. 7, a decompression nodeless tree 60 includes multiple branches 60-1 to 60-n and leaves 61-1 to 61-m. A predetermined bit sequence is assigned to each of the branches 60-1 to 60-n. The information processing apparatus 100 compares the bit sequence of the compressed data with the bit sequence that is assigned to the branches 60-1 to 60-n and identifies the leaf that is connected to the branch that hits the bit sequence of the compressed data. The leaf stores information, such as the character that corresponds to the compressed data.

For example, the data structure of a leaf is represented by 61. For example, the leaf stores the leaf identification information, the compressed code length, and the pointer to the word. The leaf identification information is the information for uniquely identifying the leaf. The compressed code length is the information that indicates a valid length among the bit sequence of the compressed data that is compared with each of the branches 60-1 to 60-n. The pointer to a word is the information for uniquely identifying the decompressed data when the compressed code is decompressed, and it corresponds to the pointer to the decompressed data.

### Configuration of the compression unit

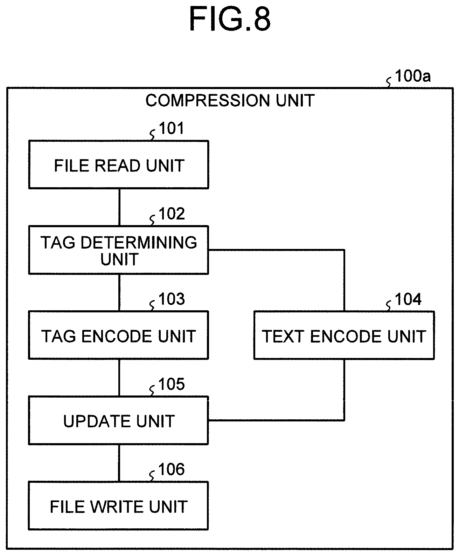

FIG. 8 is a functional block diagram that illustrates an example of the configuration of the compression unit according to the example useful for understanding the present invention. As illustrated in FIG. 8, the compression unit 100a includes a file read unit 101, a tag determining unit 102, a tag encode unit 103, a text encode unit 104, an update unit 105, and a file write unit 106.

The file read unit 101 reads the character string of the content portion in the file F1. The file read unit 101 outputs the read character string to the tag determining unit 102.

The tag determining unit 102 determines whether the character string is a tag. For example, the tag determining unit 102 determines whether the starting character of the character string is the start symbol '<' of the tag. If the starting character of the character string is the start symbol '<' of the tag, the tag determining unit 102 outputs the tag character string to the tag encode unit 103. The tag character string is the character string that starts with the start symbol '<' and ends with the end symbol '>'. Furthermore, if the starting character of the character string is not the start symbol '<' of the tag, the tag determining unit 102 outputs the character string to the text encode unit 104.

The tag encode unit 103 encodes the tag character string. For example, the tag encode unit 103 determines whether the tag character string is already stored in the tag buffer T1. If the tag character string is already stored in the tag buffer T1, the tag encode unit 103 assigns, as compressed data, the dynamic code that is in the address table T2 and that is related to the tag character string. If the tag character string is not stored in the tag buffer T1, the tag encode unit 103 collectively stores the tag character string in the tag buffer T1 and registers, in the address table T2, the storage location in which the tag character string is stored and the length of the stored data. The tag encode unit 103 assigns, as compressed data, the dynamic code that is in the address table T2 and that is related to the tag character string. Then, the tag encode unit 103 outputs the assigned compressed data to the update unit 105.

The text encode unit 104 encodes a character string. For example, the text encode unit 104 outputs a character string as an original text to the bit filter B0. The text encode unit 104 compares the bit filter B0 with the output character string and determines whether the output character string hits the bit filter B0. If the output character string hits the bit filter B0, the text encode unit 104 identifies, as compressed data, the static code that is registered in the static dictionary. Then, the text encode unit 104 outputs the identified compressed data to the update unit 105.

The update unit 105 acquires the compressed data from the tag encode unit 103 and the text encode unit 104 and stores the acquired compressed data in the memory area in the order they are acquired, whereby the memory area is updated.

After the entire character string of the content portion in the file F1 is compressed, the file write unit 106 writes the compressed data, which has been written in the memory area, into the compression file F2.

### Configuration of the decompression unit

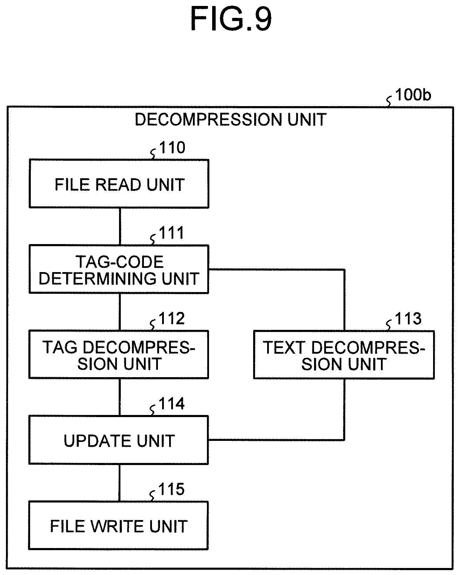

FIG. 9 is a functional block diagram that illustrates an example of the configuration of the decompression unit according to the example useful for understanding the present invention. As illustrated in FIG. 9, the decompression unit 100b includes a file read unit 110, a tag-code determining unit 111, a tag decompression unit 112, a text decompression unit 113, an update unit 114, and a file write unit 115.

The file read unit 110 reads compressed data from the compression file F2 into the memory area A1. After the decompression operation is completed for the compressed data that is stored in in the memory area, the file read unit 110 reads new compressed data from the compression file F2 and stores it in the memory area A1.

The tag-code determining unit 111 determines whether the compressed data is the code of a tag. For example, the tag-code determining unit 111 determines whether the compressed data is a dynamic code. For example, in a case where the dynamic code is a fixed-length 3-byte code that starts with the hex number "F", the tag-code determining unit 111 determines whether the beginning four bits of the compressed data are "F" and, if they are "F", it is determined that it is a dynamic code. Specifically, the tag-code determining unit 111 determines that it is the code of a tag and outputs the compressed data to the tag decompression unit 112. If not "F", the tag-code determining unit 111 determines that it is not a dynamic code. Specifically, the tag-code determining unit 111 determines that it is not the code of a tag and outputs the compressed data to the text decompression unit 113.

The tag decompression unit 112 decompresses the compressed data by using the dynamic tag dictionary T0. For example, the tag decompression unit 112 identifies the dynamic code that matches the compressed data in the address table T2 of the dynamic tag dictionary T0 and acquires the storage location and the data length that correspond to the identified dynamic code. The tag decompression unit 112 identifies, in the tag buffer T1 of the dynamic tag dictionary T0, the decompressed data with the storage location and the data length that are acquired. The tag decompression unit 112 outputs the identified decompressed data to the update unit 114.

The text decompression unit 113 decompresses compressed data by using the decompression nodeless tree. For example, the text decompression unit 113 compares the compressed data with the decompression nodeless tree and identifies the pointer to the decompressed data, indicated by the decompression nodeless tree. The text decompression unit 113 identifies the decompressed data on the basis of the identified pointer to the decompressed data. The text decompression unit 113 outputs the identified decompressed data to the update unit 114.

The update unit 114 acquires the decompressed data from the tag decompression unit 112 and the text decompression unit 113 and stores the acquired decompressed data in the memory area A3 in the order they are acquired, thereby updating the memory area.

After the entire compressed data in the compression file F2 is decompressed, the file write unit 115 writes the decompressed data, which has been written in the memory area, into the decompression file F3.

### Steps of an operation of the compression unit

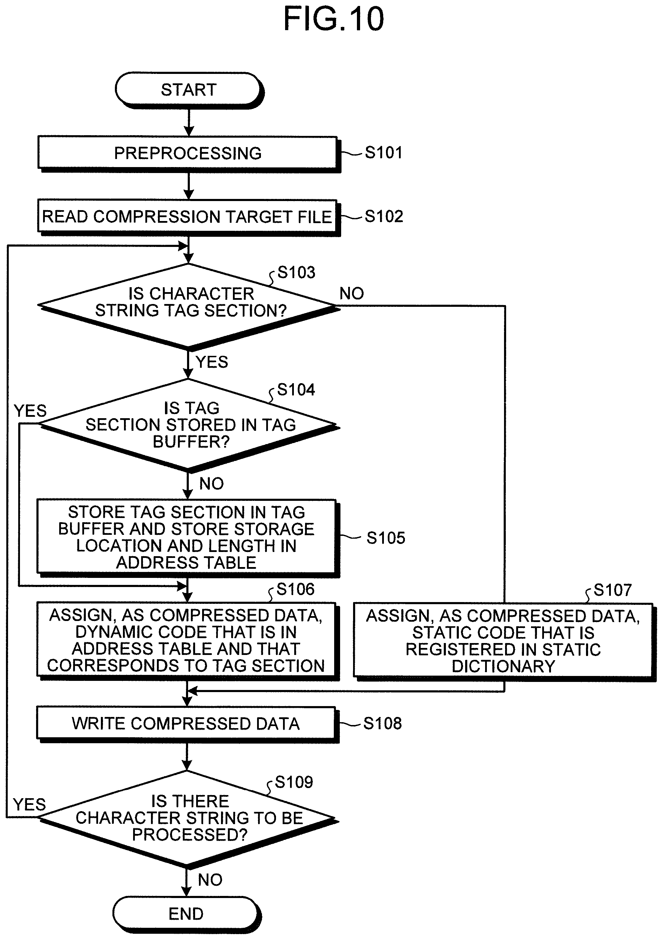

Next, an explanation is given, with reference to FIG. 10, of the steps of an operation of the compression unit 100a that is illustrated in FIG. 8. FIG. 10 is a flowchart that illustrates the steps of the operation of the compression unit according to the example useful for understanding the present invention.

As illustrated in FIG. 10, the compression unit 100a performs preprocessing (Step S101). For example, the compression unit 100a ensures various memory areas in the storage unit 100c. Then, the compression unit 100a reads the character string of the compression target file F1 into a read memory area (Step S102).

The compression unit 100a extracts a character string from the beginning of the memory area and determines whether the character string is a tag section (Step S103). For example, the compression unit 100a determines whether the beginning of the character string is the start symbol '<' of the tag character string.

If it is determined that the character string is a tag section (Step S103; Yes), the compression unit 100a determines whether the tag section is stored in the tag buffer T1 (Step S104). If the tag section is stored in the tag buffer T1 (Step S104; Yes), the compression unit 100a proceeds to Step S106 to assign the dynamic code of the tag section.

Conversely, if the tag section is not stored in the tag buffer T1 (Step S104; No), the compression unit 100a stores the tag section in the tag buffer T1 and stores the storage location and the length of the tag section in the address table T2 (Step S105). Then, the compression unit 100a proceeds to Step S106 to assign the dynamic code of the tag section.

At Step S106, the compression unit 100a assigns, as compressed data, the dynamic code that is in the address table T2 and that corresponds to the tag section (Step S106). Specifically, the compression unit 100a extracts, from the address table T2, the dynamic code that is included in the record that stores the storage location and the length of the tag section, and it assigns the extracted dynamic code as compressed data. Then, the compression unit 100a proceeds to Step S108.

If it is determined that the character string is not a tag section (Step S103; No), the compression unit 100a assigns, as compressed data, the static code that is registered in the static dictionary (Step S107). Specifically, the compression unit 100a compares the character string with the bit filter B0, the character string hits the bit filter B0, and identifies, as compressed data, the static code that is registered in the static dictionary. Then, the compression unit 100a proceeds to Step S108.

At Step S108, the compression unit 100a writes the compressed data in a write memory area (Step S108).

The compression unit 100a determines whether there is a character string to be processed in the read memory area (Step S109). If it is determined that there is a character string to be processed in the read memory area (Step S109; Yes), the compression unit 100a proceeds to Step S103 to process the subsequent character string.

Conversely, if it is determined that there is no character string to be processed in the read memory area (Step S109; No), the compression unit 100a terminates the compression operation.

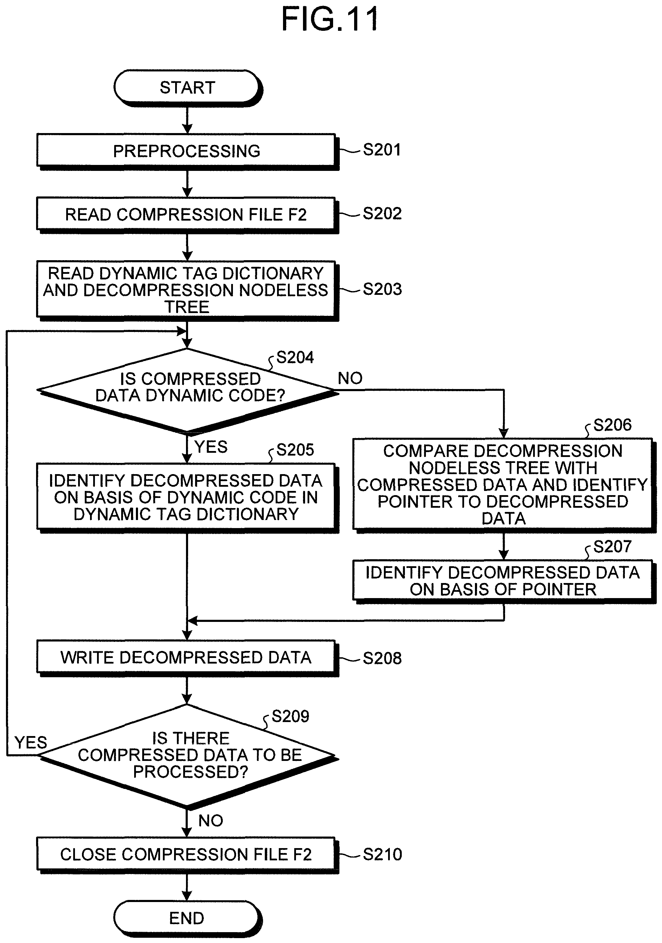

Steps of an operation of the decompression unit Next, an explanation is given, with reference to FIG. 11, of the steps of the operation of the decompression unit 100b that is illustrated in FIG. 9. FIG. 11 is a flowchart that illustrates the steps of the operation of the decompression unit according to the example useful for understanding the present invention.

As illustrated in FIG. 11, the decompression unit 100b performs preprocessing (Step S201). For example, the decompression unit 100b ensures various memory areas in the storage unit 100c. Then, the decompression unit 100b reads the compression file F2 into the read memory area (Step S202) and reads the dynamic tag dictionary T0 and the decompression nodeless tree (Step S203).

The decompression unit 100b reads the compressed data from the read memory area into the memory area A1 and determines whether the compressed data is a dynamic code (Step S204). For example, if the dynamic code is a fixed-length 3-byte code that starts with the hex number "F", the decompression unit 100b determines whether the beginning four bits of the compressed data are "F".

If it is determined that the compressed data is a dynamic code (Step S204; Yes), the decompression unit 100b identifies the decompressed data on the basis of the dynamic code in the dynamic tag dictionary T0 (Step S205). For example, the decompression unit 100b identifies, in the address table T2 of the dynamic tag dictionary T0, the dynamic code that matches the compressed data and acquires the storage location and the data length that correspond to the identified dynamic code. The tag decompression unit 112 identifies the decompressed data with the acquired data length from the acquired storage location with respect to the tag buffer T1 of the dynamic tag dictionary T0. Then, the decompression unit 100b proceeds to Step S208.

Conversely, if it is determined that the compressed data is not a dynamic code (Step S204; No), the decompression unit 100b compares the decompression nodeless tree with the compressed data and identifies the pointer to the decompressed data (Step S206). The decompression unit 100b identifies the decompressed data on the basis of the pointer to the decompressed data (Step S207). Then, the decompression unit 100b proceeds to Step S208.

At Step S208, the decompression unit 100b writes the decompressed data in the write memory area (Step S208).

The decompression unit 100b determines whether there is compressed data to be processed in the read memory area (Step S209). If it is determined that there is compressed data to be processed in the read memory area (Step S209; Yes), the decompression unit 100b proceeds to Step S204 to process the subsequent compressed data.

Conversely, if it is determined that there is no compressed data to be processed in the read memory area (Step S209; No), the decompression unit 100b terminates the decompression operation and closes the compression file F2 (Step S210).

As described above, the information processing apparatus 100 identifies a plurality of tag sections and a plurality of original text sections in input character data that includes a tag having a variable section. The information processing apparatus 100 converts each of a plurality of tags included in the plurality of tag sections into a plurality of first-type codes that respectively corresponds to tag contents of the plurality of tags. The information processing apparatus 100 converts original texts in the plurality of original text sections into a plurality of second-type codes, each of the plurality of second-type codes being separated at least in boundaries between the plurality of tag sections and the plurality of original text sections in the input character data.. The information processing apparatus 100 outputs an encoded data including the plurality of first-type codes and the plurality of second-type codes, positional relationships of the plurality of tags and the original texts in the input character data being maintained with corresponding plurality of first-type codes and corresponding plurality of second-type codes in the encoded data. With this configuration, the information processing apparatus 100 converts a tag section into the first-type code, converts an original text into the second-type code, and outputs them in a state such that the pre-conversion positional relationship of the tag section and the original text is maintained; therefore, even if there is a tag that has a variable section, the compression rate of the input character data may be improved.

Specifically, some of the tags that are used in HTML, or the like, include a variable section, such as a reference source, and the others do not include any variable sections. Here, conventionally, as for character strings in documents, the frequencies of words or characters used in each document are different, and codes are assigned based on the frequencies of words or characters that are used in the document. With regard to original texts that are the character strings other than tags, the frequencies of words that are used in each document are different, and it is preferable to assign codes based on the frequencies of words that are used in the original text. As for tags, with regard to tags that have a variable section, there are few tags that are the same in its entirety, and there are limited types of tags that do not have any variable sections. Conventionally, compression is not conducted depending on the differences in the above-described characteristics with regard to documents that include a tag, especially, documents that include a tag having a variable section; therefore the compression rate is degraded. Conversely, the information processing apparatus 100 according to the example useful for understanding the present invention converts a tag section into the first-type code, converts an original text into the second-type code, and outputs them in a state such that the pre-conversion positional relationship of the tag section and the original text is maintained; therefore, even if there is a tag that has a variable section, the compression rate of the input character data may be improved.

### [b] First embodiment

Furthermore, the information processing apparatus 100 according to the example useful for understanding the present invention identifies a tag section and an original text in the input character data that includes a tag having a variable section. The information processing apparatus 100 converts the tag section and the original text into each code of a different type and outputs the converted code in a state such that the pre-conversion positional relationship of the tag section and the original text is maintained. However, this is not a limitation, and the information processing apparatus 100 may further conduct search as to whether a search keyword is present in the original text that is surrounded by a tag of a specific tag type in the compressed state. In the case of documents related to drugs, for example, if the drug (drug efficacy) that is effective for "fever" needs to be searched with regard to the search keyword "fever", search is conducted as to whether the search keyword "fever" is present in the original text that is surrounded by the "drug efficacy" tag in a state such that the document is compressed.

Therefore, in the first embodiment, an explanation is given of a case where the information processing apparatus 100 conducts search as to whether a search keyword is present in the original text that is surrounded by the tag of a specific tag type in a compressed state.

### Flow of a compression operation

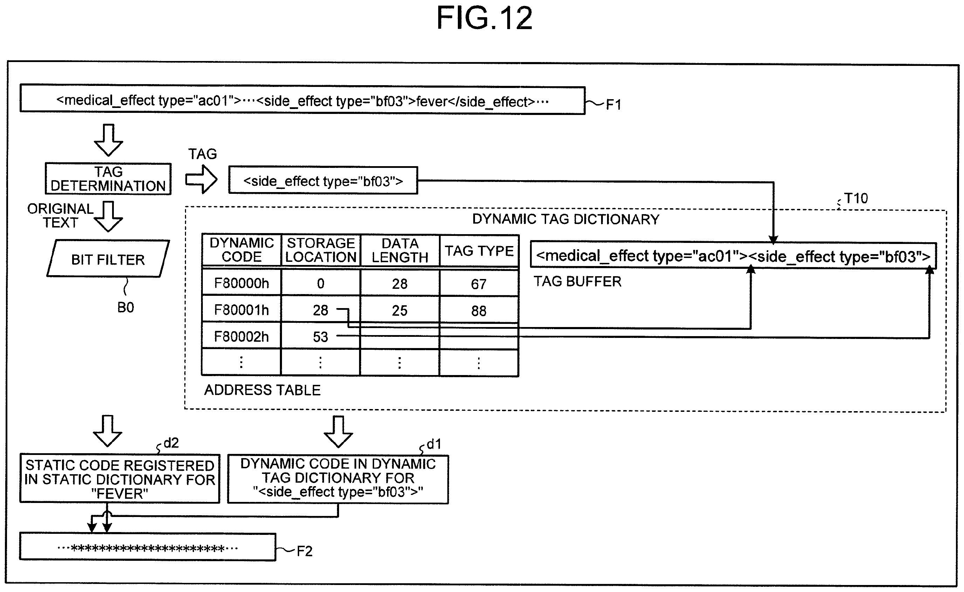

First, an explanation is given, with reference to FIG. 12, of a compression operation of the information processing apparatus according to the first embodiment. FIG. 12 is a diagram that illustrates an example of the flow of the compression operation of the information processing apparatus according to the first embodiment. The example useful for understanding the present invention and the first embodiment are different in that the dynamic tag dictionary T0 is changed into a dynamic tag dictionary T10.

As is the case with FIG. 1 according to the example useful for understanding the present invention, the file F1 is the target file to be compressed, and it is a document that includes the character strings of a tag and an original text other than the tag in a mixed manner.

The information processing apparatus loads, into a memory area, the character data that is stored in the compression target file F1. The information processing apparatus extracts a character string from the beginning of the memory area and determines whether the extracted character string is a tag. For example, the information processing apparatus determines whether the starting character of the character string is the start symbol '<' of the tag.

If the character string is a tag, the information processing apparatus determines the type (tag type) of the tag. For example, if the tag is "<medical_effect type="ac01">", the information processing apparatus determines that the tag type is "drug efficacy" on the basis of "medical_effect" that is included in the tag. As another example, if the tag is "<side_effect type="bf03">", the information processing apparatus determines that the tag type is "side effect" on the basis of "side_effect" that is included in the tag.

The information processing apparatus collectively stores the entire tag character string in the dynamic tag dictionary T10 and stores the location (storage location) where it is stored, the length (data length), and the tag type in the dynamic tag dictionary T10. Then, on the basis of the dynamic tag dictionary T10, the information processing apparatus compresses the tag character string into the compressed code that corresponds to the tag character string. Furthermore, an example of the data structure of the dynamic tag dictionary T10 is described later.

If the character string is not a tag, the information processing apparatus outputs the character string as the original text to the bit filter B0 and compresses the output character string into the compressed code (static code) that corresponds to the output character string on the basis of the bit filter B0. Here, the compression operation in a case where the character string is not a tag is the same as that in the example useful for understanding the present invention; therefore, the details are omitted.

The information processing apparatus outputs, to the compression file F2, each compressed code based on the dynamic tag dictionary T10 and each compressed code based on the bit filter B0 in a state such that the pre-conversion positional relationship of the tag or the original text with regard to each compressed code in the input character data is maintained.

### Example of the dynamic tag dictionary

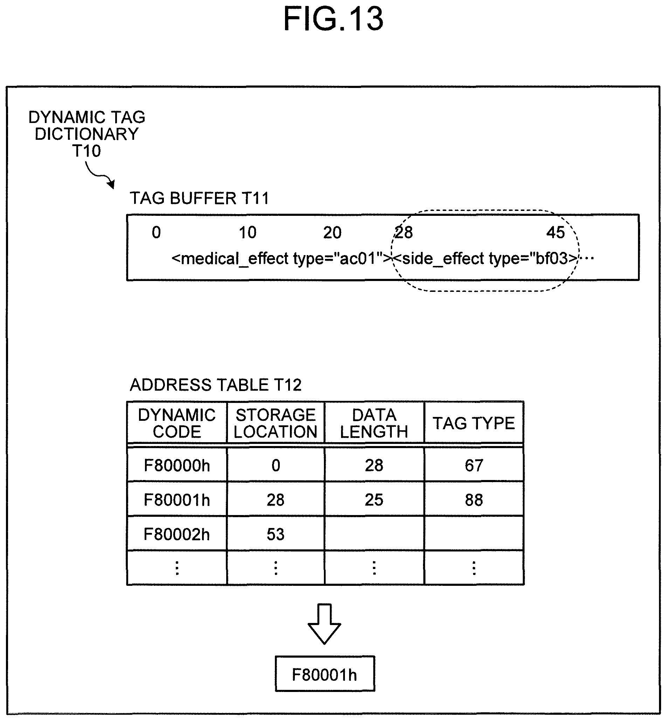

FIG. 13 is a diagram that illustrates an example of the dynamic tag dictionary according to the first embodiment. The dynamic tag dictionary T10 that is illustrated in FIG. 13 includes a tag buffer T11 and an address table T12. The tag buffer T11 stores the character string of a tag. The address table T12 stores a dynamic code, a storage location, a data length, and a tag type in a related manner. The dynamic code, the storage location, and the data length are the same as those in the dynamic tag dictionary T0 according to the example useful for understanding the present invention; therefore, the detailed explanations are omitted. The tag type is the type of a tag. For example, if the tag type is "drug efficacy", "67" that corresponds to "drug efficacy" is set. If the tag type is "side effect", "88" that corresponds to "side effect" is set. "67" and "88" may be stored such that they are previously related to tag sections that correspond to the tag type.

Here, an explanation is given of a case where a compressed code is assigned to the character string "<side_effect type="bf03">" of the tag.

The information processing apparatus determines that the tag type is "side effect" on the basis of the character string "side_effect type" of the tag and acquires "88" that is related to "side_effect type". The information processing apparatus collectively stores the character string "<side_effect type="bf03">" of the tag in the tag buffer T11. The information processing apparatus registers the storage location in which the character string of the tag is stored, the length of the stored data, and the tag type in the address table T12. Here, the information processing apparatus registers "28" as the storage location, "25" as the data length, and "88" as the tag type in the address table T12.

The information processing apparatus assigns, as a compressed code, the dynamic code that is in the address table T12 and that is related to the character string of the tag. Here, the information processing apparatus assigns, as a compressed code, the dynamic code "F80001h" that is related to the character string "<side_effect type="bf03">" of the tag.

### Flow of a search operation

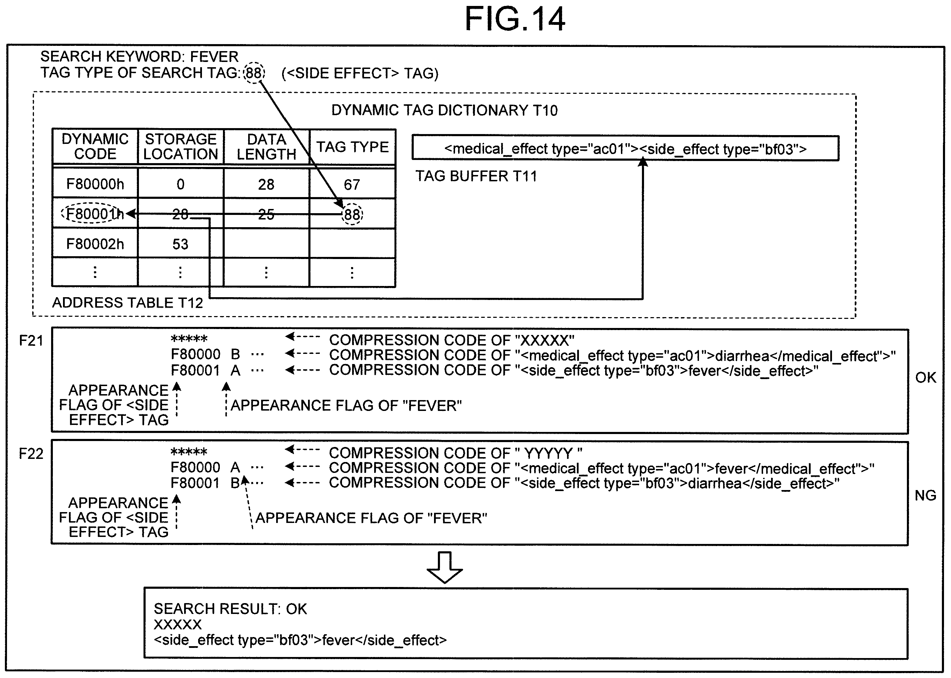

FIG. 14 is a diagram that illustrates an example of the flow of a search operation of the information processing apparatus according to the first embodiment. In FIG. 14, in a compressed state, the information processing apparatus determines whether a search keyword is present in the original text that is surrounded by the tag whose tag type is of the search tag. There are compression files F21 and F22 that are in the compressed state, and each compression file has registered therein the dynamic tag dictionary T10.

The information processing apparatus receives the search keyword and the tag type of the search tag. In the example of FIG. 14, the search keyword is "fever", and the tag type of the search tag is "88". The tag type "88" is the tag type of the tag that is related to "side effect".

On the basis of the tag type in the dynamic tag dictionary T10, the information processing apparatus identifies the dynamic code that corresponds to the tag type of the search tag. For example, the information processing apparatus identifies the hex number "F80001" as the dynamic code that corresponds to the tag type "88" of the search tag in the address table T12 of the dynamic tag dictionary T10.

The information processing apparatus identifies the compressed code (static code) that corresponds to the search keyword on the basis of the bit filter B0 by using the original text as the search keyword. Furthermore, the compression operation of the search keyword is the same as the compression operation in a case where the character string is not a tag, and it is the same as that in the example useful for understanding the present invention; therefore, the details are omitted. Here, the static code of the search keyword "fever" is "A".

With regard to the compression files F21 and F22, the information processing apparatus searches the appearance position of the dynamic code that corresponds to the tag type of the search tag and the appearance position of the compressed code that corresponds to the search keyword. In the example of FIG. 14, in the compression file F21, the dynamic code "F80001" that corresponds to the dynamic tag type "88" appears immediately before the compressed code "A" that corresponds to the search keyword "fever". Here, according to the first embodiment, the compressed codes are output to the compression files F21 and F22 in a state such that the pre-conversion positional relationship of the tag or the original text is maintained. Therefore, the information processing apparatus determines that the search keyword "fever" is present in the original text that is surrounded by the tag "side_effect type="bf03"" having the tag type "88" of the search tag and the tag "/side effect type".

Conversely, in the compression file F22, the dynamic code "F80001" that corresponds to the tag type "88" of the search tag appears after the compressed code "A" that corresponds to the search keyword "fever". Here, according to the first embodiment, the compressed codes are output to the compression files F21 and F22 in a state such that the pre-conversion positional relationship of the tag or the original text is maintained. Therefore, the information processing apparatus determines that the search keyword "fever" is not present in the original text that is surrounded by the tag "side_effect type="bf03"" having the tag type "88" of the search tag and the tag "/side_effect type".

The information processing apparatus outputs a search result. For example, if the search condition is matched, the information processing apparatus outputs "OK" as a search result. In addition, on the basis of the dynamic tag dictionary T10, the information processing apparatus outputs the character string that is obtained by decompressing the compressed portion that matches the search condition. In the example of FIG. 14, the information processing apparatus outputs "OK" as a search result with regard to the compression file F21. The information processing apparatus outputs "XXXXX" as a drug product name. In addition, the information processing apparatus outputs "<side_effect type="bf03">fever</side_effect>".

### Configuration of the information processing apparatus

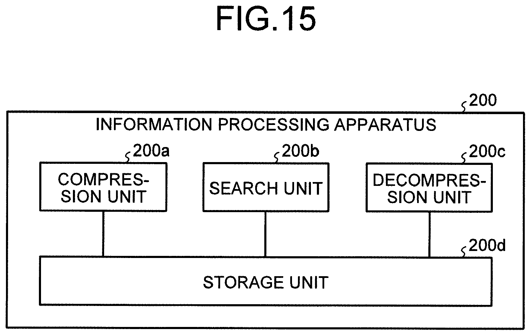

FIG. 15 is a functional block diagram that illustrates a configuration of the information processing apparatus according to the first embodiment. As illustrated in FIG. 15, an information processing apparatus 200 includes a compression unit 200a, a search unit 200b, a decompression unit 200c, and a storage unit 200d.

The compression unit 200a is a processing unit that performs the compression operation that is illustrated in FIG. 12. The search unit 200b is a processing unit that performs the search operation that is illustrated in FIG. 14. The decompression unit 200c is a processing unit that performs the same operation as that in the example useful for understanding the present invention and that performs the decompression operation that is illustrated in FIG. 5. The storage unit 200d stores the compression target file F1, the compression file F2 including the dynamic tag dictionary T10, and the decompression file F3. The storage unit 200d further stores the bit filter B0 as a compression nodeless tree and a decompression nodeless tree.

### Configuration of the search unit

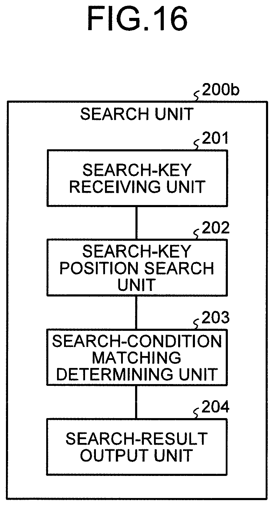

FIG. 16 is a functional block diagram that illustrates an example of the configuration of the search unit according to the first embodiment. As illustrated in FIG. 16, the search unit 200b includes a search-key receiving unit 201, a search-key position search unit 202, a search-condition matching determining unit 203, and a search-result output unit 204.

The search-key receiving unit 201 receives search keys. For example, the search-key receiving unit 201 receives the search keyword and the tag type of the search tag as search keys.

The search-key position search unit 202 searches the position that corresponds to the search key from the compression file F2. For example, the search-key position search unit 202 uses the tag type in the address table T12 included in the dynamic tag dictionary T10 to identify the dynamic code that corresponds to the tag type of the search tag. The search-key position search unit 202 identifies the compressed code (static code) that corresponds to the search keyword on the basis of the bit filter B0 by using the original text as the search keyword. Then, the search-key position search unit 202 searches the appearance position of the dynamic code that corresponds to the tag type of the search tag and the appearance position of the compressed code that corresponds to the search keyword with regard to the compression file F2.

The search-condition matching determining unit 203 determines whether the appearance position matches the search condition. For example, the search condition is such that the appearance position of the dynamic code that corresponds to the tag type of the search tag is immediately before the appearance position of the compressed code (static code) that corresponds to the search keyword. The search-condition matching determining unit 203 determines whether the appearance position of the dynamic code that corresponds to the tag type of the search tag is immediately before the appearance position of the compressed code (static code) that corresponds to the search keyword. The search-condition matching determining unit 203 determines that the search condition is matched if the appearance position of the dynamic code that corresponds to the tag type of the search tag is immediately before the appearance position of the compressed code (static code) that corresponds to the search keyword. The search-condition matching determining unit 203 determines that the search condition is not matched if the appearance position of the dynamic code that corresponds to the tag type of the search tag is not immediately before the appearance position of the compressed code (static code) that corresponds to the search keyword.

The search-result output unit 204 outputs a search result. For example, if it is determined that the appearance position matches the search condition, the search-result output unit 204 outputs, as a search result, "OK" that indicates that the search condition is matched. In addition, the search-result output unit 204 outputs the character string that is obtained by decompressing the compressed portion at the appearance position that matches the search condition on the basis of the dynamic tag dictionary T10. Furthermore, the search-result output unit 204 may output the character string that is obtained by decompressing the beginning portion of the compression file F2 where the appearance position that matches the search condition is present. If it is determined that the search condition is not matched, the search-result output unit 204 outputs, as a search result, "NG" that indicates that the search condition is not matched.

### Steps of an operation of the search unit

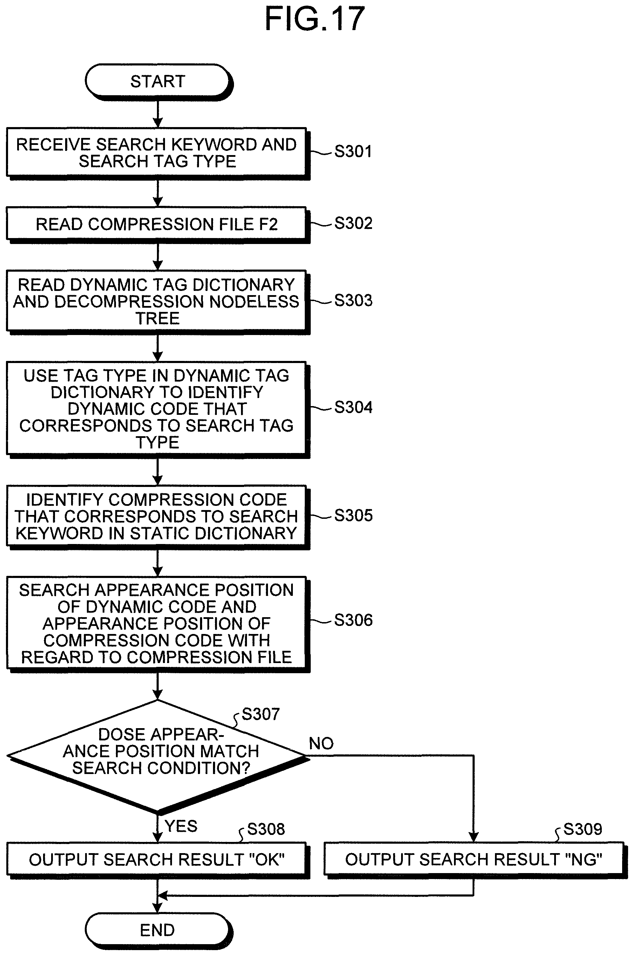

Next, an explanation is given, with reference to FIG. 17, of the steps of an operation of the search unit 200b that is illustrated in FIG. 16. FIG. 17 is a flowchart that illustrates the steps of the operation of the search unit according to the first embodiment.

As illustrated in FIG. 17, the search unit 200b receives the search keyword and the tag type of the search tag (Step S301). Then, the search unit 200b reads the compression file F2 into a search memory area (Step S302) and reads the dynamic tag dictionary T10 and the decompression nodeless tree (Step S303).

The search unit 200b uses the tag type in the dynamic tag dictionary T10 to identify the dynamic code that corresponds to the tag type of the search tag (Step S304). For example, the search unit 200b acquires, from the address table T12 included in the dynamic tag dictionary T10, the record with the same tag type as that of the search tag. The search unit 200b identifies the dynamic code included in the acquired record.

The search unit 200b identifies the compressed code that corresponds to the search keyword from the static dictionary (Step S305). For example, the search unit 200b identifies the compressed code (static code) that corresponds to the search keyword on the basis of the bit filter B0 by using the original text as the search keyword.

Next, the search unit 200b searches the appearance position of the dynamic code and the appearance position of the compressed code with regard to the compression file F2 (Step S306).

Then, the search unit 200b determines whether the appearance position matches the search condition (Step S307). For example, the search condition is such that the appearance position of the dynamic code that corresponds to the tag type of the search tag is immediately before the appearance position of the compressed code (static code) that corresponds to the search keyword. Then, by using the appearance position of the searched dynamic code and the appearance position of the searched compressed code, the search unit 200b determines whether the appearance position of the dynamic code is immediately before the appearance position of the compressed code.

If it is determined that the appearance position matches the search condition (Step S307; Yes), the search unit 200b outputs "OK" as a search result (Step S308). In addition, the search unit 200b outputs the character string that is obtained by decompressing the compressed portion at the appearance position that matches the search condition on the basis of the dynamic tag dictionary T10. Furthermore, the search unit 200b may output the character string that is obtained by decompressing the beginning portion of the compression file F2 where the appearance position that matches the search condition is present. Then, the search unit 200b terminates the search operation.

Conversely, if it is determined that the appearance position does not match the search condition (Step S307; No), the search unit 200b outputs "NG" as a search result (Step S309). Then, the search unit 200b terminates the search operation.

As described above, the information processing apparatus 200 identifies a tag section and an original text in the input character data that includes a tag having a variable section. In addition to the tag content, the information processing apparatus 200 registers, in the dynamic tag dictionary T10, the type attribute information that corresponds to the attribute of the tag in relation to the first-type code and converts each tag included in the tag section into the first-type code that corresponds to the tag content. The information processing apparatus 200 converts an original text into the second-type code at least in units separated by tags in the input character data. The information processing apparatus 200 outputs each first-type code and each second-type code in a state such that the pre-conversion positional relationship of a tag or character string in the input character data with regard to each code is maintained. With this configuration, the information processing apparatus 200 may conduct search in consideration of the tagging state with regard to the original text while compression is applied. Specifically, the information processing apparatus 200 stores, in the dynamic tag dictionary T10, the type attribute information on the tag in relation to the first-type code in addition to the tag content. Therefore, by using the dynamic tag dictionary T10, the information processing apparatus 200 may determine whether the designated search keyword is present in the original text that is surrounded by the tag that has the type attribute information on a specific tag while compression is applied.

### [c] Second embodiment

Furthermore, the information processing apparatus 200 according to the first embodiment separately encodes a tag section and the word of an original text and outputs them in a state such that the positional relationship in the original file F1 is maintained. As an example of implementation of the above-described encoding output, the information processing apparatus 200 may attach, to the code that is obtained by encoding the word of an original text, the dynamic code that is obtained by converting the tag that is attached to the word that corresponds to the code, and output it.

Therefore, in a second embodiment, an explanation is given of a case where the information processing apparatus 200 attaches, to the code that is obtained by encoding the word of an original text, the dynamic code that is obtained by converting the tag that is attached to the word that corresponds to the code, and outputs it.

### Flow of the compression operation

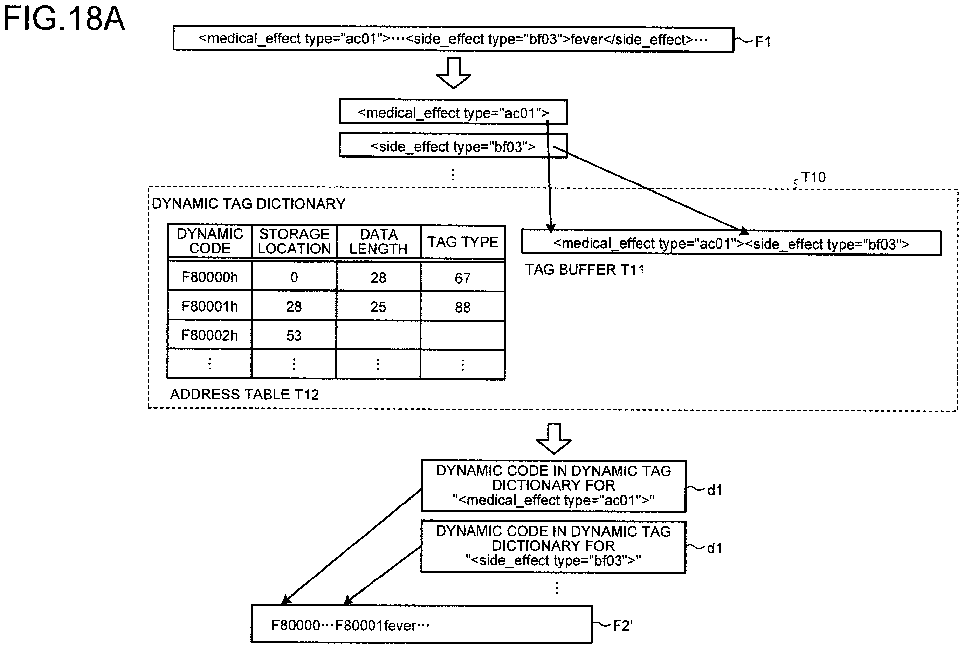

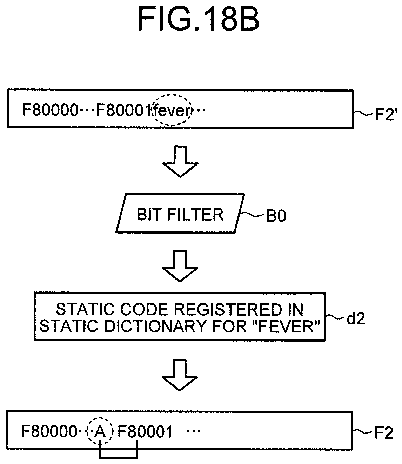

First, an explanation is given, with reference to FIGS. 18A and 18B, of the compression operation of the information processing apparatus according to the second embodiment. FIGS. 18A and 18B are diagrams that illustrate an example of the flow of the compression operation of the information processing apparatus according to the second embodiment. Here, a dynamic tag dictionary 10 has the same contents as the dynamic tag dictionary according to the first embodiment. As is the case with FIG. 12 according to the first embodiment, the file F1 is the target file to be compressed, and it is a document that includes the character strings of a tag and an original text other than the tag in a mixed manner.

As illustrated in FIG. 18A, the information processing apparatus 200 loads, into a memory area, the character data that is stored in the compression target file F1. The information processing apparatus 200 encodes a tag section with priority thereon among the character data that is loaded into the memory area. Specifically, with regard to each tag character string in the input character data, the information processing apparatus 200 collectively stores the entire tag character string in the dynamic tag dictionary T10 and stores the location (storage location) in which it is stored, the length (data length), and the tag type in the dynamic tag dictionary T10. Then, the information processing apparatus 200 compresses the tag character string into the compressed code that corresponds to the tag character string on the basis of the dynamic tag dictionary T10.

In the example of FIG. 18A, with regard to the tag character string "<medical_effect type="ac01">", the information processing apparatus 200 collectively stores the tag character string in the dynamic tag dictionary T10 and stores the storage location, the data length, and the tag type in the dynamic tag dictionary T10. Then, on the basis of the dynamic tag dictionary T10, the information processing apparatus 200 encodes the dynamic code "F80000h" that corresponds to the tag character string as a compressed code d1. With the tag character string "<side_effect type="bf03">", the information processing apparatus 200 collectively stores the tag character string in the dynamic tag dictionary T10 and stores the storage location, the data length, and the tag type in the dynamic tag dictionary T10. Then, on the basis of the dynamic tag dictionary T10, the information processing apparatus 200 encodes the dynamic code "F80001h" that corresponds to the tag character string as the compressed code d1.

The information processing apparatus 200 outputs each compressed code, which is obtained by encoding, to a memory area F2' in a state such that the pre-conversion positional relationship of the tag or the original text with regard to each compressed code in the input character data is maintained.

As illustrated in FIG. 18B, the information processing apparatus 200 outputs, to the bit filter B0, the character string (word) of the original text among the character data in the memory area F2' and, on the basis of the bit filter B0, compresses the character string of the original text into a compressed code (static code) that corresponds to the character string. In the example of FIG. 18B, with regard to the character string "fever" of the original text, the information processing apparatus 200 encodes the static code "A", which is registered in the static dictionary of the "fever", as a compressed code d2.

The information processing apparatus 200 attaches, to the compressed code that is obtained by encoding the character string of the original text, the dynamic code that is obtained by encoding the tag that is attached to the character string that corresponds to the compressed code and outputs it to the compression file F2. Specifically, during encoding of the original text, in addition to the code (static code) that corresponds to the character string (word) of the original text, the information processing apparatus 200 attaches the code (dynamic code) of the tag in the tagging in accordance with the word. In the example of FIG. 18B, the information processing apparatus 200 attaches, to the static code "A" that is obtained by encoding the word "fever" of the original text, the dynamic code "F80001" that is obtained by encoding the tag "<side_effect type="bf03">" that is attached to the word "fever" of the original text and outputs it to the compression file F2.

Thus, the information processing apparatus 200 attaches, to the compressed code that is obtained by encoding the word of the original text, the dynamic code that is obtained by encoding the tag that is attached to the word that corresponds to the compressed code and outputs it to the compression file F2; thus, search may be conducted in consideration of the tagging state with regard to the original text while compression is applied. Specifically, the information processing apparatus 200 may determine whether the designated search keyword is present in the original text that is surrounded by the tag that has the tag type of the search tag while compression is applied.

### Flow of the search operation

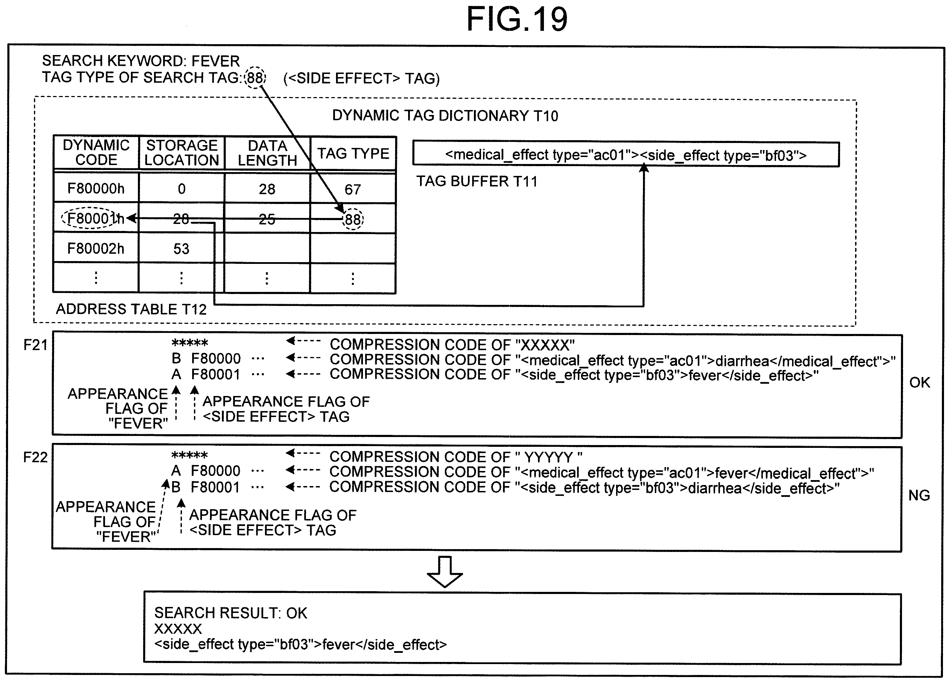

FIG. 19 is a diagram that illustrates an example of the flow of the search operation of the information processing apparatus according to the second embodiment. In FIG. 19, the information processing apparatus 200 determines whether the search keyword is present in the original text that is surrounded by the tag that has the tag type of the search tag in a compressed state. There are the compression files F21 and F22 that are in a compressed state, and each of the compression files has registered therein the dynamic tag dictionary T10.

The information processing apparatus 200 receives the search keyword and the tag type of the search tag. In the example of FIG. 19, the search keyword is "fever", and the tag type of the search tag is "88". The tag type "88" of the search tag is the tag type of the tag that is related to "side effect".

The information processing apparatus 200 uses the tag type in the dynamic tag dictionary T10 to identify the dynamic code that corresponds to the tag type of the search tag. For example, the information processing apparatus 200 identifies the hex number "F80001h" as the dynamic code that corresponds to the tag type "88" of the search tag in the address table T12 of the dynamic tag dictionary T10.

The information processing apparatus 200 identifies the compressed code (static code) that corresponds to the search keyword on the basis of the bit filter B0 by using the original text as the search keyword. Furthermore, the compression operation of the search keyword is the same as the compression operation in a case where the character string is not a tag, and it is the same as that in the example useful for understanding the present invention; therefore, the details are omitted. Here, the static code of the search keyword "fever" is "A".

With regard to the compression files F21 and F22, the information processing apparatus 200 searches the appearance position of the dynamic code that corresponds to the tag type of the search tag and the appearance position of the compressed code that corresponds to the search keyword. In the example of FIG. 19, in the compression file F21, the dynamic code "F80000" is attached to the static code "B". The dynamic code "F80001" is attached to the static code "A". In the compression file F22, the dynamic code "F80000" is attached to the static code "A". The dynamic code "F80001" is attached to the static code "B".

Under this condition, in the compression file F21, the dynamic code "F80001" that corresponds to the tag type "88" of the search tag is attached to the static code "A" of the search keyword "fever". Therefore, the information processing apparatus 200 determines that the search keyword "fever" is present in the original text that is surrounded by the tag "side_effect type="bf03"" having the tag type "88" of the search tag and the tag "/side_effect type" in the compressed state.

Conversely, in the compression file F22, the dynamic code "F80001" that corresponds to the tag type "88" of the search tag is not attached to the static code "A" of the search keyword "fever". Therefore, the information processing apparatus 200 determines that the search keyword "fever" is not present in the original text that is surrounded by the tag "side_effect type="bf03"" having the tag type "88" of the search tag and the tag "/side_effect type" in a compressed state.

The information processing apparatus 200 outputs a search result. In the example of FIG. 19, the information processing apparatus 200 outputs "OK" as a search result with regard to the compression file F21. The information processing apparatus 200 outputs "XXXXX" as a drug product name. In addition, the information processing apparatus 200 outputs "<side_effect type="bf03">fever</side_effect>".

Thus, the information processing apparatus 200 may conduct search in consideration of the tagging state with regard to the original text while compression is applied. Specifically, the information processing apparatus 200 may determine whether the designated search keyword is present in the original text that is surrounded by the tag that has the tag type of the search tag while compression is applied.

Another aspect related to the example useful for understanding the present invention to the second embodiment

Hereafter, part of a modified example of the above-described embodiments is explained. In addition to the modified example that is described below, design changes may be made as appropriate without departing from the scope of the present invention.

Furthermore, according to the example useful for understanding the present invention to the second embodiment, the information processing apparatus 100, 200 identifies a tag section and an original text in the input character data that includes a tag having a variable section and converts each of the tag section and the original text into a code of different type. Then, the information processing apparatus 100, 200 outputs the converted code in a state such that the pre-conversion positional relationship of the tag section and the original text is maintained. However, the information processing apparatus 100, 200 may perform the same compression operation on not only a tag that has a variable section but also a file name including a path or a mail address. Specifically, the information processing apparatus 100, 200 identifies a path section and a section other than the path section in the input character data that includes a file name including a path and converts each of the path section and the section other than the path section into a code of a different type. Then, the information processing apparatus 100, 200 may output the converted code in a state such that the pre-conversion positional relationship of the path section and the section other than the path section is maintained. Furthermore, the information processing apparatus 100, 200 identifies a mail address section and a section other than the mail address section in the input character data that includes the mail address and converts each of the mail address section and the section other than the mail address section into a code of a different type. Then, the information processing apparatus 100, 200 may output the converted code in a state such that the pre-conversion positional relationship of the mail address section and the section other than the mail address section is maintained. Thus, the information processing apparatus 100, 200 may improve the compression rate of the input character data even if there is a path section or a mail address section in addition to a tag that has a variable section.

Furthermore, the steps of the operation, control procedures, specific names, and information including various types of data or parameters, which are described in the example useful for understanding the present invention to the second embodiment, may be changed as appropriate if not otherwise specified.

### Hardware configuration of the information processing apparatus

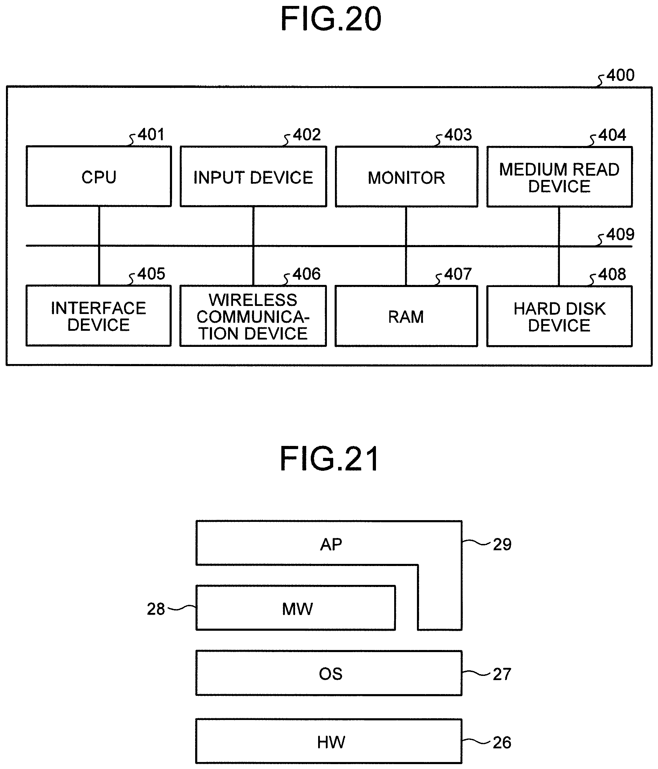

FIG. 20 is a diagram that illustrates a hardware configuration of the information processing apparatus according to the example useful for understanding the present invention to the second embodiment. As illustrated in the example of FIG. 20, a computer 400 includes a CPU 401 that performs various calculation operations; an input device 402 that receives data input from a user; and a monitor 403. The computer 400 further includes a medium read device 404 that reads programs, or the like, from a storage medium; an interface device 405 for connecting to a different device; and a wireless communication device 406 for connecting to a different device via radio waves. Furthermore, the computer 400 includes a RAM 407 that temporarily stores various types of information; and a hard disk device 408. Furthermore, each of the devices 401 to 408 is connected to a bus 409.

The hard disk device 408 stores a character-data conversion program that has the same functionality as each processing unit, such as the tag determining unit 102, the tag encode unit 103, the text encode unit 104, and the update unit 105, which are illustrated in FIG. 8. Furthermore, the hard disk device 408 stores various types of data for implementing the character-data conversion program.

The CPU 401 reads each program that is stored in the hard disk device 408, loads it into the RAM 407, and executes it, thereby performing various operations. The programs may cause the computer 400 to serve as, for example, the tag determining unit 102, the tag encode unit 103, the text encode unit 104, and the update unit 105, which are illustrated in FIG. 8.

Furthermore, the above-described character-data conversion program does not always need to be stored in the hard disk device 408. For example, the program may be stored in a storage medium readable by the computer 400 and executed by being read by the computer 400. The storage medium readable by the computer 400 is equivalent to, for example, a portable recording medium, such as a CD-ROM, DVD disk, or universal serial bus (USB) memory, a semiconductor memory, such as a flash memory, or a hard disk drive. Furthermore, the program may be stored in a device that is connected to a public network, the Internet, a local area network (LAN), or the like, and executed by being read from the above by the computer 400.

FIG. 21 is a diagram that illustrates an example of the configuration of a program that is executed by the computer. In the computer 400, an operating system (OS) 27 is operated to control a hardware group 26 (401 to 409) that is illustrated in FIG. 20. The CPU 401 is operated with the procedure in accordance with the OS 27 so that the hardware group 26 is controlled and managed, whereby processing based on an application program 29 or middleware 28 is executed by the hardware group 26. Furthermore, in the computer 400, the middleware 28 or the application program 29 is read into the RAM 407 and is executed by the CPU 401.

If a compression command is received by the CPU 401, processing is performed based on at least part of the middleware 28 or the application program 29, and the compression function of the compression unit 100a is implemented (the hardware group 26 is controlled based on the OS 27 for the above processing). The compression function may be included in the application program 29, or it may be part of the middleware 28 that is executed when it is invoked in accordance with the application program 29.

According to an aspect, even if compression is conducted on a document that includes a tag and an original text in a mixed manner, the compression rate of the original text may be improved. Furthermore, while compression is applied to a document that includes a tag and an original text in a mixed manner, a character string may be searched in the original text in consideration of the tagging state.

## Claims

1. An encoding program comprising instructions which when the program is executed by a computer, causes the computer (100, 200) to carry out:
identifying (102) a plurality of tag sections and a plurality of original text sections in input character data that includes a tag having a variable section;
first converting (103) each of a plurality of tags included in the plurality of tag sections into a respective first-type code that corresponds to collective tag content of the respective tag, the first converting (103) including registering the plurality of tags in a tag buffer (T11) included in a dynamic dictionary (T10), assigning the first-type code in the order it is registered and storing the first-type code, a tag type and a storage location in a related manner in an address table (T12) included in the dynamic dictionary (T10), wherein the first-type code has a predetermined fixed-length and the storage location is that of the corresponding tag in the tag buffer (T11);
second converting (104) original texts in the plurality of original text sections into a plurality of second-type codes based on a static dictionary, each of the plurality of second-type codes being separated at least in boundaries between the plurality of tag sections and the plurality of original text sections in the input character data;
outputting (105) an encoded data including the plurality of first-type codes converted from the tag sections in the input character data at the first converting, the plurality of second-type codes converted from the original text sections in the input character data at the second converting and the dynamic dictionary (T10), wherein positional relationships of the plurality of tags and the original texts in the input character data being maintained with corresponding plurality of first-type codes and corresponding plurality of second-type codes in the encoded data; and
searching (200b) whether a search keyword surrounded by tags is present in the encoded data output by the outputting (105) by
receiving the search keyword and a tag type of the search tag (S301);
reading the encoded data output by the outputting (105);
using the tag type to identify a given first-type code corresponding to the tag type of the search tag (S304);
identifying a given second-type code that corresponds to the search keyword from the static dictionary (S305);
searching an appearance position of the given first-type code and the appearance position of the given second-type code with regard to the encoded data (S306);
determining whether the appearance position matches a search condition (S307), wherein the search condition is such that the appearance position of the given first-type code surrounds the appearance position of the given second-type code;
outputting a character string that is obtained by decompressing the compressed portion at the appearance position that matches the search condition on the basis of the dynamic dictionary (T10).

2. The encoding program according to claim 1, wherein the outputting (200, 105) includes outputting by attaching, to the second-type code that is obtained by converting the original text, the first-type code that is obtained by converting the tag that is attached to the original text.

3. An encoding device comprising:
an identifying unit (102) that identifies a plurality of tag sections and a plurality of original text sections in input character data that includes a tag having a variable section;
a first converting unit (103) that converts each of a plurality of tags included in the plurality of tag sections into a respective first-type code that corresponds to collective tag content of the respective tag, the first converting unit (103) registering the plurality of tags in a tag buffer (T11) included in a dynamic dictionary, assigning the first-type codein the order it is registered and storing the first-type code, a tag type and a storage location in a related manner in an address table (T12) included in the dynamic dictionary, wherein the first-type code has a predetermined fixed-length and the storage location is that of the corresponding tag in the tag buffer (T11);
a second converting unit (104) that converts original texts in the plurality of original text sections into a plurality of second-type codes based on a static dictionary, each of the plurality of second-type codes being separated at least in boundaries between the plurality of tag sections and the plurality of original text sections in the input character data;
an output unit (105) that outputs an encoded data including the plurality of first-type codes converted from the tag sections in the input character data at the first converting, the plurality of second-type codes converted from the original text sections in the input character data at the second converting and the dynamic dictionary, wherein positional relationships of the plurality of tags and the original texts in the input character data being maintained with corresponding plurality of first-type codes and corresponding plurality of second-type codes in the encoded data; and
a searching unit (200b) configured to search whether a search keyword surrounded by tags is present in the encoded data output by the output unit (105) by
receiving the search keyword and a tag type of the search tag (S301);
reading the encoded data output by the output unit (105);
using the tag type to identify a given first-type code corresponding to the tag type of the search tag (S304);
identifying a given second-type code that corresponds to the search keyword from the static dictionary (S305);
searching an appearance position of the given first-type code and the appearance position of the given second-type code with regard to the encoded data (S306);
determining whether the appearance position matches a search condition (S307), wherein the search condition is such that the appearance position of the given first-type code surrounds the appearance position of the given second-type code;
outputting a character string that is obtained by decompressing the compressed portion at the appearance position that matches the search condition on the basis of the dynamic dictionary.

4. An encoding method executed by a computer, the method comprising:
identifying (102) a plurality of tag sections and a plurality of original text sections in input character data that includes a tag having a variable section;
converting (103) each of a plurality of tags included in the plurality of tag sections into a respective first-type code that corresponds to collective tag content of the respective tag, the converting (103) including registering the plurality of tags in a tag buffer (T11) included in a dynamic dictionary (T10), assigning the first-type code in the order it is registered and storing the first-type code, a tag type and a storage location in a related manner in an address table (T12) included in the dynamic dictionary (T10), wherein the first-type code has a predetermined fixed-length and the storage location is that of the corresponding tag in the tag buffer (T11);
converting (104) original texts in the plurality of original text sections into a plurality of second-type codes based on a static dictionary, each of the plurality of second-type codes being separated at least in boundaries between the plurality of tag sections and the plurality of original text sections in the input character data;
outputting (105) an encoded data including the plurality of first-type codes converted from the tag sections in the input character data at the first converting, the plurality of second-type codes converted from the original text sections in the input character data at the second converting and the dynamic dictionary (T10), wherein positional relationships of the plurality of tags and the original texts in the input character data being maintained with corresponding plurality of first-type codes and corresponding plurality of second-type codes in the encoded data; and
searching (200b) whether a search keyword surrounded by tags is present in the encoded data output by the outputting (105) by
receiving the search keyword and a tag type of the search tag (S301);
reading the encoded data output by the outputting (105);
using the tag type to identify a given first-type code corresponding to the tag type of the search tag (S304);
identifying a given second-type code that corresponds to the search keyword from the static dictionary (S305);
searching an appearance position of the given first-type code and the appearance position of the given second-type code with regard to the encoded data (S306);
determining whether the appearance position matches the search condition (S307), wherein the search condition is such that the appearance position of the given first-type code surrounds the appearance position of the given second-type code;
outputting a character string that is obtained by decompressing the compressed portion at the appearance position that matches the search condition on the basis of the dynamic dictionary (T10).

## Patentansprüche

1. Codierungsprogramm, umfassend Anweisungen, die, wenn das Programm mittels eines Computers ausgeführt wird, den Computer (100, 200) veranlassen, Folgendes auszuführen:
Identifizieren (102) einer Vielzahl von Tagabschnitten und einer Vielzahl von Originaltextabschnitten in Eingabezeichendaten, die einen Tag einschließen, der einen variablen Abschnitt aufweist;
erstes Konvertieren (103) jedes einer Vielzahl von Tags, die in der Vielzahl von Tagabschnitten eingeschlossen sind, in einen entsprechenden Code der ersten Art, der einem kollektiven Taginhalt des entsprechenden Tags entspricht, wobei das erste Konvertieren (103) Registrieren der Vielzahl von Tags in einem Tagpuffer (T11) einschließt, der in einem dynamischen Wörterbuch (T10) eingeschlossen ist, Zuweisen des Codes der ersten Art in der Reihenfolge, wie er registriert wird und Speichern des Codes der ersten Art, einer Tag-Art und eines Speicherorts in einer darauf bezogenen Weise in einer Adresstabelle (T12), die in dem dynamischen Wörterbuch (T10) eingeschlossen ist, wobei der Code der ersten Art eine vorbestimmte fixierte Länge aufweist und der Speicherort der des entsprechenden Tags in dem Tagpuffer (T11) ist;
zweites Konvertieren (104) von Originaltexten in der Vielzahl von Originaltextabschnitten in eine Vielzahl von Codes zweiter Art, basierend auf einem statischen Wörterbuch, wobei jeder der Vielzahl von Codes zweiter Art mindestens in Grenzen zwischen der Vielzahl von Tagabschnitten und der Vielzahl von Originaltextabschnitten in den Eingabezeichendaten separiert ist;
Ausgeben (105) codierter Daten, die die Vielzahl von Codes erster Art, die bei dem ersten Konvertieren aus den Tagabschnitten in den Eingabezeichendaten konvertiert wurden, die Vielzahl von Codes zweiter Art, bei dem zweiten Konvertieren aus den Originaltextabschnitten in den Eingabezeichendaten konvertiert wurden, und das dynamische Wörterbuch (T10) einschließen,
wobei Positionsbeziehungen der Vielzahl von Tags und der Originaltexte in den Eingabezeichendaten mit entsprechender Vielzahl von Codes erster Art und entsprechender Vielzahl von Codes zweiter Art in den codierten Daten aufrecht erhalten werden; und
Suchen (200b), ob ein Suchschlüsselwort, umgeben von Tags, in der codierten Datenausgabe präsent ist mittels des Ausgebens (105) durch
Empfangen des Suchschlüsselworts und einer Art von Tag des Suchtags (S301);
Auslesen der codierten Datenausgabe durch das Ausgeben (105);
Verwenden der Art von Tag, um einen gegebenen Code erster Art zu identifizieren, der der Art von Tag des Suchtags (S304) entspricht;
Identifizieren eines gegebenen Code zweiter Art, der dem Suchschlüsselwort aus dem statischen Wörterbuch (S305) entspricht;
Suchen einer Erscheinungsbildposition des gegebenen Codes erster Art und der Erscheinungsbildposition des gegebenen Codes zweiter Art von in Bezug auf die codierten Daten (S306);
Bestimmen, ob die Erscheinungsbildposition mit einer Suchbedingung (S307) übereinstimmt, wobei die Suchbedingung so ist, dass die Erscheinungsbildposition des gegeben Codes erster Art die Erscheinungsbildposition des gegebenen Codes zweiter Art umgibt;
Ausgeben einer Zeichenfolge, die mittels Dekomprimierens des komprimierten Anteils der Erscheinungsbildposition erhalten wird, die mit der Suchbedingung auf der Basis des dynamischen Wörterbuchs (T10) übereinstimmt.

2. Codierungsprogramm nach Anspruch 1, wobei das Ausgeben (200, 105) Ausgeben mittels Anfügens an den Code zweiter Art, der mittels Konvertierens des Originaltexts erhalten wird, des Codes erster Art, der mittels Konvertierens des Tags, der an den Originaltext angefügt ist, erhalten wird, einschließt.

3. Codierungsvorrichtung, umfassend:
eine Identifizierungseinheit (102), die eine Vielzahl von Tagabschnitten und eine Vielzahl von Originaltextabschnitten in Eingabezeichendaten, die einen Tag einschließt, der einen variablen Abschnitt aufweist, identifiziert;
eine erste Konvertierungseinheit (103), die jeden der Vielzahl von Tags, die in der Vielzahl von Tagabschnitten eingeschlossen sind, in einen entsprechenden Code erster Art konvertiert, der dem kollektiven Taginhalt des entsprechenden Tags entspricht, wobei die erste Konvertierungseinheit (103) die Vielzahl von Tags in einem Tagpuffer (T11) registriert, der in einem dynamischen Wörterbuch eingeschlossen ist, das den Code erster Art in der Reihenfolge zuweist, in der er registriert wird und der Code erster Art, eine Art von Tag und einen Speicherort in einer darauf bezogenen Weise in einer Adresstabelle (T12) speichert, die in dem dynamischen Wörterbuch eingeschlossen ist, wobei der Code erster Art eine vorbestimmte fixierte Länge aufweist und der Speicherort der des entsprechenden Tags in dem Tagpuffer (T11) ist;
eine zweite Konvertierungseinheit (104), die basierend auf einem statischen Wörterbuch Originaltexte in der Vielzahl von Originaltextabschnitten in eine Vielzahl von Codes zweiter Art konvertiert, wobei jeder der Vielzahl von Codes zweiter Art mindestens in Grenzen zwischen der Vielzahl von Tagabschnitten und der Vielzahl von Originaltextabschnitten in den Eingabezeichendaten separiert ist;
eine Ausgabeeinheit (105), die codierte Daten ausgibt, die die Vielzahl von Codes erster Art, die bei dem ersten Konvertieren aus den Tagabschnitten in den Eingabezeichendaten konvertiert wurden, die Vielzahl von Codes zweiter Art, die bei dem zweiten Konvertieren aus den Originaltextabschnitten in die Eingabezeichendaten konvertiert wurden, und das dynamische Wörterbuch einschließen, wobei Positionsbeziehungen der Vielzahl von Tags und des Originaltexts in den Eingabezeichendaten mit entsprechender Vielzahl von Codes erster Art und entsprechender Vielzahl von Codes zweiter Art in den codierten Daten aufrecht erhalten werden; und
eine Sucheinheit (200b), konfiguriert, um zu suchen, ob ein Suchschlüsselwort, das von den Tags umgeben ist, in der codierten Datenausgabe präsent ist, mittels der Ausgabeeinheit (105) durch
Empfangen des Suchschlüsselworts und einer Art von Tag des Suchtags (S301);
Auslesen der codierten Datenausgabe mittels der Ausgabeeinheit (105);
Verwenden der Art von Tag, um einen gegebenen Code erster Art entsprechend der Art von Tag des Suchtags (S304) zu identifizieren;
Identifizieren eines gegebenen Codes zweiter Art, der dem Suchschlüsselwort aus dem statischen Wörterbuch (S305) entspricht;
Suchen einer Erscheinungsbildposition des gegebenen Codes erster Art und der Erscheinungsbildposition des gegebenen Codes zweiter Art von in Bezug auf die codierten Daten (S306);
Bestimmen, ob die Erscheinungsbildposition mit einer Suchbedingung (S307) übereinstimmt, wobei die Suchbedingung so ist, dass die Erscheinungsbildposition des gegebenen Codes erster Art von die Erscheinungsbildposition des gegebenen Codes zweiter Art umgibt;
Ausgeben einer Zeichenfolge, die durch Dekomprimieren des komprimierten Anteils an der Erscheinungsbildposition, die mit der Suchbedingung auf der Basis des dynamischen Wörterbuchs übereinstimmt, erhalten wird.

4. Codierungsverfahren, ausgeführt mittels eines Computers, wobei das Verfahren umfasst:
Identifizieren (102) einer Vielzahl von Tagabschnitten und einer Vielzahl von Originaltextabschnitten in Eingabezeichendaten, die einen Tag einschließen, der einen variablen Abschnitt aufweist;
Konvertieren (103) jedes der Vielzahl von Tags, die in der Vielzahl von Tagabschnitten eingeschlossen sind, in einen entsprechenden Code erster Art, der einem kollektiven Taginhalt des entsprechenden Tags entspricht, wobei das Konvertieren (103) Registrieren der Vielzahl von Tags in einem Tagpuffer (T11) einschließt, der in einem dynamischen Wörterbuch (T10) eingeschlossen ist,
Zuweisen des Codes erster Art in der Reihenfolge, in der er registriert wird und Speichern des Codes erster Art, einer Art von Tag und eines Speicherorts in einer darauf bezogenen Weise in einer Adresstabelle (T12), die in dem dynamischen Wörterbuch (T10) eingeschlossen ist, wobei der Code erster Art eine vorbestimmte fixierte Länge aufweist und der Speicherort der des entsprechenden Tags in dem Tagpuffer (T11) ist;
Konvertieren (104) von Originaltexten in der Vielzahl von Originaltextabschnitten in eine Vielzahl von Codes zweiter Art, basierend auf einem statischen Wörterbuch, wobei die Vielzahl von Codes zweiter Art mindestens in Grenzen zwischen der Vielzahl von Tagabschnitten und der Vielzahl von Originaltextabschnitten in den Eingabezeichendaten separiert ist;
Ausgeben (105) codierter Daten, die die Vielzahl von Codes erster Art einschließen, die die Vielzahl von bei dem ersten Konvertieren aus den Tagabschnitten in die Eingabezeichendaten konvertierten Codes erster Art, die Vielzahl von bei dem zweiten Konvertieren aus den Originaltextabschnitten in die Eingabezeichendaten konvertierten Codes zweiter Art und des dynamischen Wörterbuchs (T10) einschließen,
wobei Positionsbeziehungen der Vielzahl von Tags und der Originaltexte in den Eingabezeichendaten mit entsprechender Vielzahl von Codes erster Art und entsprechender Vielzahl von Codes zweiter Art von in den codierten Daten aufrecht erhalten werden; und
Suchen (200b), ob ein Suchschlüsselwort, umgeben mittels Tags, in der codierten Datenausgabe präsent ist, mittels Ausgebens (105) durch
Empfangen des Suchschlüsselworts und einer Art von Tag des Suchtags (S301);
Auslesen der codierten Datenausgabe mittels des Ausgebens (105);
Verwenden der Art von Tag, um einen gegebenen Code erster Art entsprechend der Art von Tag des Suchtags (S304) zu identifizieren;
Identifizieren eines gegebenen Codes zweiter Art, der dem Suchschlüsselwort aus dem statischen Wörterbuch (S305) entspricht;
Suchens einer Erscheinungsbildposition des gegebenen Codes erster Art und der Erscheinungsbildposition des gegebenen Codes zweiter Art von in Bezug auf die codierten Daten (S306);
Bestimmen, ob die Erscheinungsbildposition mit der Suchbedingung (S307) übereinstimmt, wobei die Suchbedingung so ist, dass die Erscheinungsbildposition des gegebenen Codes erster Art die Erscheinungsbildposition des gegeben Codes zweiter Art umgibt;
Ausgeben einer Zeichenfolge, die durch Dekomprimieren des komprimierten Anteils an der Erscheinungsbildposition, die mit der Suchbedingung auf der Basis des dynamischen Wörterbuchs (T10) übereinstimmt, erhalten wird.

## Revendications

1. Programme de codage comprenant des instructions qui, lorsque le programme est exécuté par un ordinateur, amène l'ordinateur (100, 200) à réaliser :
une identification (102) d'une pluralité de sections d'étiquette et d'une pluralité de sections de textes originaux dans des données de caractère d'entrée qui incluent une étiquette ayant une section variable ;
une première conversion (103) de chacune d'une pluralité d'étiquettes incluses dans la pluralité de sections d'étiquette en un code de premier type respectif qui correspond à un contenu d'étiquette collectif de l'étiquette respective, la première conversion (103) incluant un enregistrement de la pluralité d'étiquettes dans une mémoire tampon d'étiquettes (T11) incluse dans un dictionnaire dynamique (T10), une attribution du code de premier type dans l'ordre où il est enregistré et un stockage du code de premier type, d'un type d'étiquette et d'un emplacement de stockage de manière connexe dans une table d'adresses (T12) incluse dans le dictionnaire dynamique (T10), dans lequel le code de premier type a une longueur fixe prédéterminée et l'emplacement de stockage est celui de l'étiquette correspondante dans la mémoire tampon d'étiquettes (T11) ;
une seconde conversion (104) de textes originaux dans la pluralité de sections de textes originaux en une pluralité de codes de second type d'après un dictionnaire statique, chacun de la pluralité de codes de second type étant séparé au moins en frontières entre la pluralité de sections d'étiquette et la pluralité de sections de textes originaux dans les données de caractère d'entrée ;
une fourniture en sortie (105) d'une donnée codée incluant la pluralité de codes de premier type convertis à partir des sections d'étiquette dans les données de caractère d'entrée à la première conversion, la pluralité de codes de second type convertis à partir des sections de textes originaux dans les données de caractère d'entrée à la seconde conversion et le dictionnaire dynamique (T10),
dans lequel des relations de position de la pluralité d'étiquettes et des textes originaux dans les données de caractère d'entrée sont maintenues avec une pluralité correspondante de codes de premier type et une pluralité correspondante de codes de second type dans la donnée codée ; et
une recherche (200b) permettant de savoir si un mot-clé de recherche entouré d'étiquettes est présent dans la donnée codée fournie en sortie par la fourniture en sortie (105) par
réception du mot-clé de recherche et d'un type d'étiquette de l'étiquette de recherche(S301) ;
lecture de la donnée codée fournie en sortie par la fourniture en sortie (105) ;
utilisation du type d'étiquette pour identifier un code de premier type donné correspondant au type d'étiquette de l'étiquette de recherche (S304) ;
identification d'un code de second type donné qui correspond au mot-clé de recherche à partir du dictionnaire statique (S305) ;
recherche d'une position d'apparition du code de premier type donné et de la position d'apparition du code de second type donné en ce qui concerne la donnée codée (S306) ;
détermination que la position d'apparition concorde ou non avec une condition de recherche (S307), dans lequel la condition de recherche est que la position d'apparition du code de premier type donné entoure la position d'apparition du code de second type donné ;
fourniture en sortie d'une chaîne de caractères qui est obtenue par décompression de la portion compressée à la position d'apparition qui concorde avec la condition de recherche sur la base du dictionnaire dynamique (T10).

2. Programme de codage selon la revendication 1, dans lequel la fourniture en sortie (200, 105) comporte une fourniture en sortie par annexion, au code de second type qui est obtenu par conversion du texte original, du code de premier type qui est obtenu par conversion de l'étiquette qui est annexée au texte original.

3. Dispositif de codage comprenant :
une unité d'identification (102) qui identifie une pluralité de sections d'étiquette et une pluralité de sections de textes originaux dans des données de caractère d'entrée qui incluent une étiquette ayant une section variable ;
une première unité de conversion (103) qui convertit chacune d'une pluralité d'étiquettes incluses dans la pluralité de sections d'étiquette en un code de premier type respectif qui correspond à un contenu d'étiquette collectif de l'étiquette respective, la première unité de conversion (103) enregistrant la pluralité d'étiquettes dans une mémoire tampon d'étiquettes (T11) incluse dans un dictionnaire dynamique, attribuant le code de premier type dans l'ordre où il est enregistré et stockant le code de premier type, un type d'étiquette et un emplacement de stockage de manière connexe dans une table d'adresses (T12) incluse dans le dictionnaire dynamique, dans lequel le code de premier type a une longueur fixe prédéterminée et l'emplacement de stockage est celui de l'étiquette correspondante dans la mémoire tampon d'étiquettes (T11) ;
une seconde unité de conversion (104) qui convertit des textes originaux dans la pluralité de sections de textes originaux en une pluralité de codes de second type d'après un dictionnaire statique, chacun de la pluralité de codes de second type étant séparé au moins en frontières entre la pluralité de sections d'étiquette et la pluralité de sections de textes originaux dans les données de caractère d'entrée ;
une unité de fourniture en sortie (105) qui fournit en sortie une donnée codée incluant la pluralité de codes de premier type convertis à partir des sections d'étiquette dans les données de caractère d'entrée à la première conversion, la pluralité de codes de second type convertis à partir des sections de textes originaux dans les données de caractère d'entrée à la seconde conversion et le dictionnaire dynamique, dans lequel des relations de position de la pluralité d'étiquettes et des textes originaux dans les données de caractère d'entrée sont maintenues avec une pluralité correspondante de codes de premier type et une pluralité correspondante de codes de second type dans la donnée codée ; et
une unité de recherche (200b) configurée pour rechercher si un mot-clé de recherche entouré d'étiquettes est présent dans la donnée codée fournie en sortie par l'unité de fourniture en sortie (105) par
réception du mot-clé de recherche et d'un type d'étiquette de l'étiquette de recherche (S301) ;
lecture de la donnée codée fournie en sortie par l'unité de fourniture en sortie (105) ;
utilisation du type d'étiquette pour identifier un code de premier type donné correspondant au type d'étiquette de l'étiquette de recherche (S304) ;
identification d'un code de second type donné qui correspond au mot-clé de recherche à partir du dictionnaire statique (S305) ;
recherche d'une position d'apparition du code de premier type donné et de la position d'apparition du code de second type donné en ce qui concerne la donnée codée (S306) ;
détermination que la position d'apparition concorde ou non avec une condition de recherche (S307), dans lequel la condition de recherche est que la position d'apparition du code de premier type donné entoure la position d'apparition du code de second type donné ;
fourniture en sortie d'une chaîne de caractères qui est obtenue par décompression de la portion compressée à la position d'apparition qui concorde avec la condition de recherche sur la base du dictionnaire dynamique.

4. Procédé de codage exécuté par un ordinateur, le procédé comprenant :
une identification (102) d'une pluralité de sections d'étiquette et d'une pluralité de sections de textes originaux dans des données de caractère d'entrée qui incluent une étiquette ayant une section variable ;
une conversion (103) de chacune d'une pluralité d'étiquettes incluses dans la pluralité de sections d'étiquette en un code de premier type respectif qui correspond à un contenu d'étiquette collectif de l'étiquette respective, la conversion (103) incluant un enregistrement de la pluralité d'étiquettes dans une mémoire tampon d'étiquettes (T11) incluse dans un dictionnaire dynamique (T10), une attribution du code de premier type dans l'ordre où il est enregistré et un stockage du code de premier type, d'un type d'étiquette et d'un emplacement de stockage de manière connexe dans une table d'adresses (T12) incluse dans le dictionnaire dynamique (T10), dans lequel le code de premier type a une longueur fixe prédéterminée et l'emplacement de stockage est celui de l'étiquette correspondante dans la mémoire tampon d'étiquettes (T11) ;
une conversion (104) de textes originaux dans la pluralité de sections de textes originaux en une pluralité de codes de second type d'après un dictionnaire statique, chacun de la pluralité de codes de second type étant séparé au moins en frontières entre la pluralité de sections d'étiquette et la pluralité de sections de textes originaux dans les données de caractère d'entrée ;
une fourniture en sortie (105) d'une donnée codée incluant la pluralité de codes de premier type convertis à partir des sections d'étiquette dans les données de caractère d'entrée à la première conversion, la pluralité de codes de second type convertis à partir des sections de textes originaux dans les données de caractère d'entrée à la seconde conversion et le dictionnaire dynamique (T10),
dans lequel des relations de position de la pluralité d'étiquettes et des textes originaux dans les données de caractère d'entrée sont maintenues avec une pluralité correspondante de codes de premier type et une pluralité correspondante de codes de second type dans la donnée codée ; et
une recherche (200b) qu'un mot-clé de recherche entouré d'étiquettes est présent ou non dans la donnée codée fournie en sortie par la fourniture en sortie (105) par
réception du mot-clé de recherche et d'un type d'étiquette de l'étiquette de recherche (S301) ;
lecture de la donnée codée fournie en sortie par la fourniture en sortie (105) ;
utilisation du type d'étiquette pour identifier un code de premier type donné correspondant au type d'étiquette de l'étiquette de recherche (S304) ;
identification d'un code de second type donné qui correspond au mot-clé de recherche à partir du dictionnaire statique (S305) ;
recherche d'une position d'apparition du code de premier type donné et de la position d'apparition du code de second type donné en ce qui concerne la donnée codée (S306) ;
détermination que la position d'apparition concorde ou non avec une condition de recherche (S307), dans lequel la condition de recherche est que la position d'apparition du code de premier type donné entoure la position d'apparition du code de second type donné ;
fourniture en sortie d'une chaîne de caractères qui est obtenue par décompression de la portion compressée à la position d'apparition qui concorde avec la condition de recherche sur la base du dictionnaire dynamique (T10).
